(19) Europäisches Patentamt
European Patent Office
Office européen des brevets

(11) **EP 3 594 139 A2**

(12) **EUROPÄISCHE PATENTANMELDUNG**

(43) Veröffentlichungstag:
**15.01.2020 Patentblatt 2020/03**

(51) Int Cl.:
***B65B 67/02*** *(2006.01)*

(21) Anmeldenummer: **19185267.2**

(22) Anmeldetag: **09.07.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **10.07.2018 DE 102018211388**

(71) Anmelder: **FRAUNHOFER-GESELLSCHAFT zur
Förderung
der angewandten Forschung e.V.
80686 München (DE)**

(72) Erfinder:
• **Mättig, Benedikt
44227 Dortmund (DE)**
• **Döltgen, Martin
44227 Dortmund (DE)**
• **Wrycza, Philipp
44227 Dortmund (DE)**

(74) Vertreter: **König, Andreas Rudolf et al
Schoppe, Zimmermann, Stöckeler
Zinkler, Schenk & Partner mbB
Patentanwälte
Radlkoferstraße 2
81373 München (DE)**

(54) **PACKASSISTENZSYSTEM, PACKARBEITSPLATZ UND VERFAHREN ZUR UNTERSTÜTZUNG EINES VERPACKENS**

(57) Ein Packassistenzsystem (10.20) zur Unterstützung eines Verpackens zumindest eines Packobjekts (12) in dem Packvolumen (14) umfasst eine Steuereinrichtung (16), die ausgebildet ist, um einen Ablagebereich (18) für das zumindest eine Packobjekt in dem Packvolumen zu bestimmen und umfasst eine Anzeigeeinrichtung (22, 48), die ausgebildet ist, um den Ablagebereich anzuzeigen, wobei die Anzeigeeinrichtung benachbart zu dem Produktvolumen angeordnet ist.

Fig. 1

**Beschreibung**

Die vorliegende Erfindung bezieht sich auf ein Packassistenzsystem, einen Packarbeitsplatz und auf ein Verfahren zur Unterstützung eines Verpackens. Die vorliegende Erfindung bezieht sich ferner auf einen integrierten Pack-Assistenten.

Der Online-Handel erfährt ein stetiges Wachstum und zeichnet sich durch die Eigenschaft aus, dass Bestellungen meist aus heterogenen Produkten bestehen, die gemeinsam in einem Paket über einen Kurier-, Express- oder Paketdienst (KEP) versendet werden müssen. Das Volumen sowie die optimale Ausnutzung der verwendeten Kartonage sind zwei Kostenfaktoren, die im Verpackungsprozess eine große Herausforderung darstellen. Auf der einen Seite werden die Stammdaten der zu verpackenden Ware benötigt, um eine optimale Verpackung sowie eine Anordnung der Objekte in der Kartonage zu berechnen. Auf der anderen Seite muss die Auswahl der optimalen Kartonagen erfolgen, um eine optimale Volumennutzung der Verpackung zu gewährleisten. Aufgrund sehr heterogener und stetig wechselnder Produktspektren sind Stammdaten in den meisten Fällen nur unvollständig vorhanden.

Mit vorhandenen Stammdaten besteht die Möglichkeit, das Verpackungsschema einer zu verpackenden Bestellung zu berechnen. Für die Berechnung existieren verschiedene Lösungen am Markt. Eine große Herausforderung besteht darüber hinaus in der Darstellung des berechneten Packschemas. Dieses muss dem Mitarbeiter intuitiv und möglichst simpel dargestellt werden, um den Verpackungsprozess nicht zu verlangsamen. Dabei muss das einwandfreie Verständnis der Anweisungen durch den Verpacker gewährleistet sein. Darüber hinaus wird eine durchgehende Dokumentation des Verpackungsvorgangs benötigt, die sowohl den Zustand als auch die fehlerfreie Ausführung des Prozesses erfassen und speichern kann.

Eine allgemeine Anforderung im industriellen Einsatz ist, dass ein Assistenzsystem den Prozess nicht um zusätzliche Arbeitsschritte erweitern darf. Außerdem wird eine kostengünstige Gesamtlösung gewünscht, die sich sowohl in vorhandene als auch neue Verpackungstische integrieren lässt.

Für die Stammdatenerfassung existieren am Markt verschiedene Systeme und Ansätze, die sich in zwei Bereiche einteilen lassen. Auf der einen Seite stehen die automatisierten Systeme, die beispielsweise an einer Fördertechnik angebracht werden und die durchgeschleusten Objekte mit Hilfe einer entsprechenden Vorrichtung vermessen. Auf der anderen Seite stehen teilautomatisierte Systeme, die Objekte einzeln erfassen und ein manuelles Einbringen der zu vermessenden Objekte in das Messsystem erfordern.

Aufseiten der automatisierten Stammdatenerfassung lassen sich z.B. die kamerabasierten Systeme nennen, die in eine Fördertechnik integriert werden können und die Abmaße sowie das Gewicht der Objekte erfassen.

Als Beispiel für ein stationäres und teilautomatisiertes Erfassungssystem lassen sich Systeme nennen, die eingehaust sind und aus einem Drehteller mit integriertem Wägemodul bestehen. Mit Hilfe von Kamera- und Lasertechnik werden die Stammdaten der zu vermessenden Objekte mit einer sehr hohen Genauigkeit erfasst.

Für die Darstellung der Verpackungsschemata existieren am Markt Lösungen, die mit Projektionstechnik arbeiten. Hierfür werden sowohl Beamer als auch Laserprojektoren verwendet, die die Verpackungsanweisungen direkt in der Kartonage darstellen können.

Nachteilig an bekannten Lösungen ist eine hohe technische Komplexität, die mit einem hohen Kostenfaktor einhergeht und eine geringe Intuitivität aufweist.

Wünschenswert wäre demnach ein Packassistenzsystem, ein Packarbeitsplatz und ein Verfahren zur Unterstützung eines Verpackens, das einen einfachen Aufbau und eine hohe Intuitivität aufweist.

Eine Aufgabe der vorliegenden Erfindung besteht darin, ein Packassistenzsystem, einen Packarbeitsplatz und ein Verfahren zur Unterstützung eines Verpackens zu schaffen, das eine geringe Komplexität und eine hohe Intuitivität aufweist.

Diese Aufgabe wird durch den Gegenstand der unabhängigen Patentansprüche gelöst.

Gemäß einem Ausführungsbeispiel umfasst ein Packassistenzsystem zur Unterstützung eines Verpackens zumindest eines Packobjekts in ein Packvolumen eine Steuereinrichtung, die ausgebildet ist, um einen Ablagebereich für das zumindest eine Packobjekt in dem Packvolumen zu bestimmen. Das Packassistenzsystem umfasst ferner eine an dem Packvolumen ausgerichtete Anzeigeeinrichtung, die ausgebildet ist, um den Ablagebereich anzuzeigen, wobei die Anzeigeeinrichtung benachbart zu dem Packvolumen angeordnet ist. Durch die Anzeige des Ablagebereichs benachbart zu dem Packvolumen können technisch einfache Anzeigen verwendet werden, was eine geringe technische Komplexität ermöglicht und dennoch eine hohe Intuitivität ermöglicht, da eine verpackende Person die Anzeige der Anzeigeeinrichtung basierend auf der räumlichen Nähe zum Packvolumen intuitiv in den zu wählenden Ablagebereich überführt.

Gemäß einem Ausführungsbeispiel umfasst die Anzeigeeinrichtung zumindest zwei balkenförmige Anzeigeelemente, die ein Koordinatensystem für eine Ebene des Packvolumens aufspannen. Koordinatensysteme werden intuitiv wahrgenommen und können durch Balkenelemente einfach realisiert werden.

Gemäß einem Ausführungsbeispiel ist die Anzeigeeinrichtung ausgebildet, um den Ablagebereich durch eine räumlich selektive farbliche Veränderung eines Anzeigeelements anzuzeigen. Eine räumliche selektive farbliche Veränderung ermöglicht die Wahrnehmung des zu wählenden Ablagebereichs mit einer hohen Intuitivität, was schnelle Verpackungszyklen ermöglicht.

Gemäß einem bevorzugten Ausführungsbeispiel umfasst die Anzeigeeinrichtung zumindest zwei balkenförmige Anzeigeelemente, die räumlich selektiv, etwa durch Einsatz mehrerer Leuchtdioden pro Leuchtbalken, ein zweidimensionales Koordinatensystem in einer Ebene parallel zu einem Verpackungstisch aufspannen. Durch räumlich selektive Veränderung einer Helligkeit und/oder Farbe in den Anzeigeelementen kann der Ablagebereich intuitiv dargestellt werden und gleichzeitig eine Verdeckung einer Anzeige durch die verpackende Person selbst vermieden werden, etwa wenn sich die Person über die Kartonage beugt.

Gemäß einem Ausführungsbeispiel ist die Anzeigeeinrichtung so angeordnet, dass Anzeigeelemente ein Koordinatensystem mit zumindest zwei Achsen für eine Ebene des Packvolumens aufspannen und die Anzeigeeinrichtung ausgebildet ist, um die räumlich selektive farbliche Veränderung in Bereichen der Achsen anzuzeigen, die gemeinsam den Ablageort in der Ebene darstellen. Eine Verwendung farblicher Veränderungen ermöglicht eine weiter gesteigerte intuitive Wahrnehmung, etwa durch positive Farben, etwa Grün, für zu wählende Ablageorte gegenüber zu vermeidenden Orten, etwa Rot, da Farben äußerst intuitiv wahrgenommen werden.

Gemäß einem Ausführungsbeispiel umfasst die Anzeigeeinrichtung zumindest eine erste LED-Leiste mit einer ersten Mehrzahl von LEDs und eine zweite LED-Leiste mit einer zweiten Mehrzahl von LEDs, die konfiguriert sind, um in einer Anordnung senkrecht zueinander ein Koordinatensystem für eine Ebene des Packvolumens aufzuspannen und durch räumlich selektive Aktivierung oder Deaktivierung von LEDs der ersten Mehrzahl und/oder zweiten Mehrzahl den Ablageort der Ebene darzustellen. Vorteilhaft an der Verwendung mehrerer LEDs ist eine hohe Auflösung der Darstellbarkeit der Ablagebereiche.

Gemäß einem Ausführungsbeispiel umfasst das Packassistenzsystem eine weitere, dritte LED-Leiste mit einer dritten Mehrzahl von LEDs, die konfiguriert ist, um bei einer Anordnung senkrecht zu der ersten LED-Leiste und der zweiten LED-Leiste eine dritte Achse des Koordinatensystems darzustellen und/oder um einen Verpackungsfortschritt darzustellen. Die Darstellung in einer dritten Raumrichtung ermöglicht eine weitere Präzisierung der Position des Ablagebereichs. Alternativ oder zusätzlich kann, etwa analog zu einem sich zunehmend füllenden Balken, der Verpackungsfortschritt dargestellt werden, um eine weitere intuitive Informationsgrundlage für die verpackende Person bereitzustellen.

Gemäß einem Ausführungsbeispiel ist die Anzeigeeinrichtung ausgebildet, um den Ablagebereich in grüner Farbe darzustellen. Die Farbe Grün wird intuitiv mit "in Ordnung" oder dergleichen assoziiert, so dass ein Informationsgehalt der Anzeige intuitiv wahrgenommen werden kann, was keine oder lediglich geringfügige zeitliche Verzögerungen in der Interpretation der Anzeige bewirkt.

Gemäß einem Ausführungsbeispiel ist der Ablageort dem Packobjekt gemäß einem Packschema zugeordnet. Das Packassistenzsystem weist eine Erfassungseinrichtung auf, die ausgebildet ist, um das Packvolumen zu erfassen, und um der Steuereinrichtung ein Zustandssignal bereitzustellen, das eine Information bezüglich einer Identifikation eines in dem Packvolumen befindlichen Packobjekts aufweist. Die Steuereinrichtung ist konfiguriert, um basierend auf dem Zustandssignal den Ablagebereich gemäß der Zuordnung in dem Packschema anzuzeigen. So kann das Packassistenzsystem erkennen, welches Packobjekt von der verpackenden Person gerade verpackt wird und kann die Anzeige so ausgestalten, dass das derzeit verpackte Objekt identifiziert und sein Ablagebereich in dem Packvolumen angezeigt wird. Dies ermöglicht eine hohe Flexibilität des Arbeitsablaufs und eine gesteigerte Intuitivität.

Gemäß einem Ausführungsbeispiel ist die Steuereinrichtung ausgebildet, um ein Packschema für das zumindest eine Packobjekt in dem Packvolumen unter Verwendung von Stammdaten des Packobjekts zu bestimmen. So kann der Steuereinrichtung mitgeteilt werden, etwa durch eine Benutzereingabe oder durch eine automatisierte Erkennung, welche Packobjekte in das Packvolumen zu packen sind. Unter Verwendung der Stammdaten kann ein Packschema berechnet werden und das Packschema der verpackenden Person angezeigt werden. Dies kann mit geringem zeitlichen Aufwand erfolgen, so dass eine hohe Effizienz des Verpackungsprozesses erhalten wird.

Gemäß einem Ausführungsbeispiel umfasst das Packassistenzsystem eine Sensoreinrichtung, die konfiguriert ist, um eine Abmessung des Packobjekts zu erfassen und ein Sensorsignal bereitzustellen, das die Abmessung angibt. Die Steuereinrichtung ist ausgebildet, um Stammdaten des zumindest einen Packobjekts basierend auf dem Sensorsignal zu bestimmen. Dies ermöglicht die Erfassung von Stammdaten durch das Packassistenzsystem, so dass fehlende Stammdaten autonom gewonnen werden können.

Gemäß einem Ausführungsbeispiel ist die Sensoreinrichtung ausgebildet, um die Abmessung in einer Ebene zu erfassen und ein erstes Sensorsignal auszugeben, das eine erste Abmessung des Packobjekts in einer ersten Orientierung in der Ebene angibt. Die Sensoreinrichtung ist ausgebildet, um ein zweites Sensorsignal auszugeben, das eine zweite Abmessung des Packobjekts in einer zweiten Orientierung in der Ebene angibt. Die Steuereinrichtung ist ausgebildet, um basierend auf dem ersten und zweiten Sensorsignal die Stammdaten zumindest im Hinblick auf die räumliche Ausdehnung des Packobjekts zu bestimmen. Zwischen der ersten Orientierung und der zweiten Orientierung kann das Packobjekt durch einen Benutzer gedreht werden, so dass ein einfaches und intuitiv zu bedienendes Erfassungssystem verwendet werden kann.

Gemäß einem Ausführungsbeispiel umfasst die Sensoreinrichtung eine Mehrzahl von Näherungssensoren und/oder eine Mehrzahl von Fotodetektoren, die ausgebildet sind, um eine Anwesenheit des Packobjekts in einer Nähe der Sensoreinrichtung zu erfassen. Dies ermöglicht eine einfache und zugleich präzise Erfassung der Abmessung des Packobjekts.

Gemäß einem Ausführungsbeispiel ist der Sensoreinrichtung und die Anzeigeeinrichtung in einer gemeinsamen Einrichtung angeordnet, was eine geringe räumliche Ausdehnung des Packassistenzsystems ermöglicht.

Gemäß einem Ausführungsbeispiel umfasst die Anzeigeeinrichtung zumindest eine erste und eine zweite LED-Leiste. Die Sensoreinrichtung umfasst eine Mehrzahl von Sensorelementen, etwa die vorteilhaften Näherungssensoren oder Fotodetektoren, die an der ersten LED-Leiste und der zweiten LED-Leiste angeordnet sind. Dies ermöglicht hochintegrierte Einrichtungen, die sowohl zur Anzeige als auch zur Erfassung geeignet sind.

Gemäß einem Ausführungsbeispiel ist das Packassistenzsystem ausgebildet, um eine Überprüfung einer Position des Packobjekts in dem Packbereich bezüglich eines zuvor bestimmten Packschemas auszuführen. Dies ermöglicht eine Überprüfung dahin gehend, ob der Benutzer das Packobjekt in dem angezeigten Ablagebereich abgelegt hat und ermöglicht ferner eine gegebenenfalls notwendige Korrektur während des Verpackungsprozesses, so dass eine aufwändige abschließende Fehlersuche im Falle eines fehlerhaften Ablageorts vermieden werden kann.

Gemäß einem Ausführungsbeispiel weist das Packassistenzsystem eine Erfassungseinrichtung auf, die ausgebildet ist, um den Packbereich zu erfassen, und um der Steuereinrichtung ein Erfassungssignal bereitzustellen. Die Steuereinrichtung ist ausgebildet, um basierend auf dem Erfassungssignal die Position des Packobjekts in dem Packbereich zu erfassen und mit dem zuvor bestimmten Packschema zu vergleichen, und um die Anzeigeeinrichtung so zu steuern, dass diese anzeigt, ob die Position des Packobjekts in dem Packbereich mit dem zuvor bestimmten Packschema übereinstimmt. Hierfür kann die Erfassungseinrichtung beispielsweise eine Kamera umfassen, was eine einfache und technisch unaufwändige Erzeugung des Erfassungssignals ermöglichen.

Gemäß einem Ausführungsbeispiel ist die Steuereinrichtung ausgebildet, um die Anzeigeeinrichtung so zu steuern, dass eine Übereinstimmung des Packobjekts in dem Packbereich mit dem Packschema durch die Farbe Grün angezeigt wird und/oder eine fehlerhafte Position des Packobjekts in dem Packbereich durch die Farbe Rot angezeigt wird. Dies ermöglicht eine intuitive Rückmeldung an den Benutzer.

Gemäß einem Ausführungsbeispiel ist das Packassistenzsystem ausgebildet, um die Überprüfung der Position des Packobjekts in dem Packbereich bezüglich des zuvor bestimmten Packschemas basierend auf einer Benutzereingabe auszuführen. Beispielsweise kann der Benutzer eine Geste ausführen und/oder einen Taster betätigen, um dem Packassistenzsystem anzuzeigen, dass das Packobjekt verpackt ist. Aufbauend hierauf kann das Packassistenzsystem überprüft werden, um die Überprüfung ausführen. Dies ermöglicht die Vermeidung fehlerhafter oder irritierender Anzeigen, bevor der Benutzer das Packobjekt tatsächlich verpackt hat.

Gemäß einem Ausführungsbeispiel ist das Packvolumen ein Kartonageninnenvolumen oder ein bestapelbares Volumen, beispielsweise auf einer Palette. Das Packvolumen kann eine tatsächliche oder imaginäre Außenbegrenzung aufweisen, wobei das Packassistenzsystem flexibel für verschiedene Packvolumina einsetzbar ist.

Gemäß einem Ausführungsbeispiel ist das Packobjekt eines aus einer Mehrzahl von Packobjekten, die in dem Packvolumen zu verpacken sind. Das Packassistenzsystem ist konfiguriert, um sequenziell nacheinander eine korrespondierende Mehrzahl von Ablageorten oder Ablagebereichen für die Mehrzahl von Packobjekten in dem Packvolumen anzuzeigen. Hierfür kann beispielsweise eine vordefinierte Reihenfolge durch einen Benutzer oder das System bestimmt werden oder alternativ der Ablagebereich für dasjenige Packobjekt angezeigt werden, welches vom Benutzer in die Hand genommen wird.

Gemäß einem Ausführungsbeispiel umfasst ein Packarbeitsplatz einen Verpackungstisch und ein Packassistenzsystem gemäß den hierin beschriebenen Ausführungsbeispielen.

Gemäß einem Ausführungsbeispiel ist die Anzeigeeinrichtung des Packassistenzsystems in den Verpackungstisch integriert, was eine geringe Beeinträchtigung für den Benutzer durch die Anzeigeeinrichtung ermöglicht, etwa im Hinblick auf Bereiche des Tisches, über die ein Packobjekt geschoben werden kann.

Gemäß einem Ausführungsbeispiel umfasst ein Verfahren zur Unterstützung eines Verpackens zumindest eines Packobjekts in ein Packvolumen ein Bestimmen eines Ablagebereichs für das zumindest eine Packobjekt in dem Packvolumen und ein Anzeigen des Ablagebereichs benachbart zu dem Packvolumen.

Weitere vorteilhafte Ausführungsbeispiele sind der Gegenstand weiterer abhängiger Patentansprüche.

Bevorzugte Ausführungsformen der vorliegenden Erfindung werden nachfolgend Bezug nehmend auf die beiliegenden Zeichnungen erläutert. Es zeigen:

Fig. 1    eine schematische perspektivische Ansicht eines Packassistenzsystems gemäß einem Ausführungsbeispiel, das zur Unterstützung eines Verpackens zumindest eines Packobjekts in ein Packvolumen ausgelegt ist;

Fig. 2    eine schematische perspektivische Ansicht eines Packassistenzsystems gemäß einem Ausführungsbeispiel, das auf einem Packtisch angeordnet ist;

Fig. 3    eine schematische Aufsicht auf den Packtisch aus Fig. 2, bei dem das Packvolumen durch eine Kartonage räumlich begrenzt ist;

Fig. 4    eine schematische Aufsicht auf eine Sensoreinrichtung, die konfiguriert ist, um eine Abmessung eines Packobjekt gemäß einem Ausführungsbeispiel entlang zumindest einer Richtung x und/oder y zu erfassen;

Fig. 5a    eine schematische Aufsicht auf eine kombinierte Einrichtung zum Anzeigen eines Ablageortes und zum Erfassen einer Objektabmessung gemäß einem Ausführungsbeispiel;

Fig. 5b    eine schematische Aufsicht auf eine kombinierte Einrichtung zum Anzeigen eines Ablageortes und zum Erfassen einer Objektabmessung durch Distanzsensoren gemäß einem weiteren Ausführungsbeispiel;

Fig. 6    eine schematische perspektivische Ansicht eines Packassistenzsystems gemäß einem Ausführungsbeispiel, bei dem die Anzeigeeinrichtung Teil einer kombinierten Einrichtung ist;

Fig. 7    eine schematische perspektivische Ansicht eines Packarbeitsplatzes gemäß einem Ausführungsbeispiel; und

Fig. 8    eine schematische Seitenschnittansicht eines Packarbeitsplatzes gemäß einem Ausführungsbeispiel, bei dem das die kombinierte Einrichtung einen Rahmen aufweist und LEDs der Anzeigeeinrichtung gegenüber einer Oberfläche des Packtisches geneigt sind.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgende Ausführungsbeispiele beziehen sich auf das Anzeigen eines Ablagebereichs für ein Packobjekt in einem Packvolumen. Manche der hierin beschriebenen Ausführungsbeispiele beziehen sich darauf, dass zur Bestimmung des Ablagebereichs in dem Packvolumen Stammdaten des Packobjekts verwendet werden, wobei Stammdaten eine Form, räumliche Ausdehnung und/oder Gewicht, aber auch zusätzliche Informationen, beispielsweise eine Materialbeschaffenheit, eine Gefahrenklasse oder dergleichen aufweisen können.

Manche der nachfolgend beschriebenen Ausführungsbeispiele beziehen sich darauf, dass eine Mehrzahl oder Vielzahl von Packobjekten in dem Packvolumen zu verpacken ist. Basierend auf den Stammdaten kann ein Packschema bestimmt werden, gemäß dem die Packobjekte in dem Packvolumen abzulegen sind, beispielsweise, um eine hohe Packdichte zu erhalten und/oder um eine Beschädigung zu vermeiden, etwa indem schwere Gegenstände nach unten gelegt werden. Konzepte zum Bestimmen eines Packschemas sind dem Fachmann bekannt.

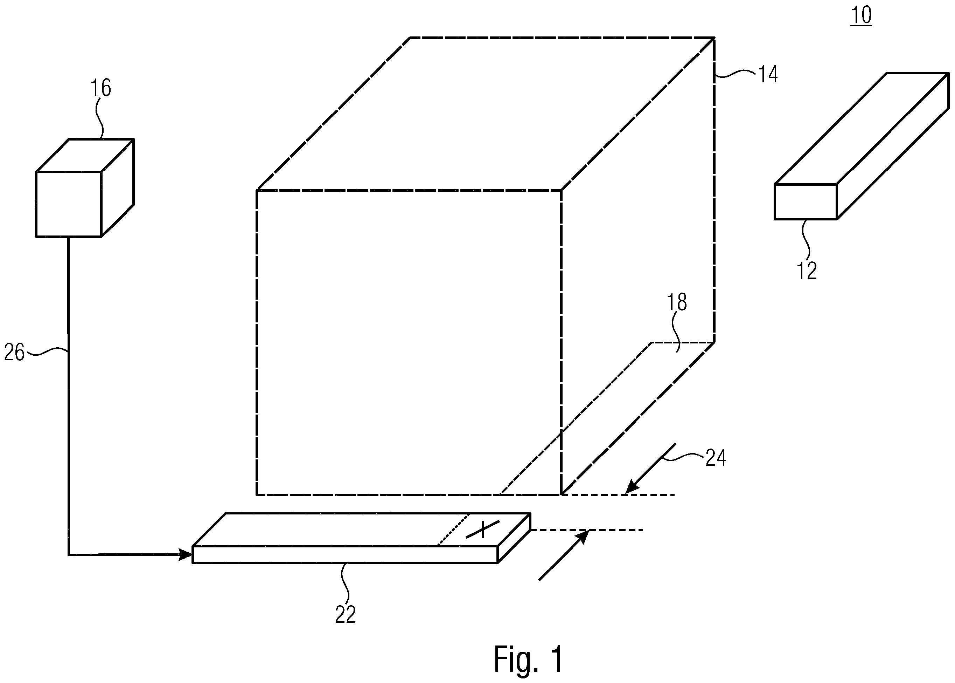

Fig. 1 zeigt eine schematische perspektivische Ansicht eines Packassistenzsystems 10 gemäß einem Ausführungsbeispiel, das zur Unterstützung eines Verpackens zumindest eines Packobjekts 12 in ein Packvolumen 14 ausgelegt ist. Das Packvolumen 14 kann ein durch kontinuierliche oder diskontinuierliche Seitenwände bestimmtes Innenvolumen eines zu versenden Gegenstands sein, beispielsweise ein Kartonageninhalt. Alternativ oder zusätzlich kann das Packvolumen 14 ein bestapelbares Volumen einer Transportunterlage sein, beispielsweise einer Palette, insbesondere einer Stapelpalette.

Das Packassistenzsystem 10 umfasst eine Steuereinrichtung 16, die ausgebildet ist, um einen Ablagebereich 18 für das Packobjekt 12 in dem Packvolumen 14 zu bestimmen. Hierfür kann die Steuereinrichtung 16 ausgebildet sein, um gemäß einem Packschema den Ablagebereich 18 so zu bestimmen, festzulegen oder zuzuordnen, dass die Steuereinrichtung 16 eine Information darüber wiedergeben kann, an welchem Ort oder in welchem Bereich das Packobjekt 12 in dem Packvolumen 14 anzuordnen ist, wobei diese Information eindeutig sein kann, was jedoch nicht zwingend erforderlich ist.

Das Packassistenzsystem umfasst eine Anzeigeeinrichtung 22, die ausgebildet ist, um den Ablagebereich 18 anzuzeigen. Hierfür kann die Anzeigeeinrichtung 22 für eine räumliche selektive Anzeige ausgelegt sein, beispielsweise durch Ändern einer Farbe und/oder Helligkeit. Alternativ kann die Anzeigeeinrichtung 22 auch zur binären Informationswiedergabe ausgelegt sein, beispielsweise als flächiges Leuchtpanel oder dergleichen, um zumindest eine Anzeige hierüber wiederzugeben, ob das Packobjekt 12 im jetzigen Verpackungsschritt anzuordnen ist oder nicht. Auf bevorzugte Ausgestaltungen der Anzeigeeinrichtung wird später eingegangen. Die Anzeigeeinrichtung 22 kann an dem Packvolumen ausgerichtet sein, wobei sie bspw. parallel zu Seiten des Packvolumens verläuft.

Die Anzeigeeinrichtung 22 ist benachbart zu dem Packvolumen 14 angeordnet, das bedeutet, eine Anzeige des Ablagebereich 18 durch die Anzeigeeinrichtung 22 erfolgt ganz oder teilweise außerhalb des Packvolumens 14. So sehen Ausführungsbeispiele vor, dass ein Abstand 24 zwischen dem Packvolumen 14 und der Anzeigeeinrichtung 22 vorhanden ist, wobei gemäß alternativen Ausführungsbeispielen auch ein höchstens teilweise Überlapp des Packvolumens 14 mit der Anzeigeeinrichtung 22 möglich ist. In einer vorteilhaften Ausgestaltung kann die Anzeigeeinrichtung eine Art mechanische Begrenzung für das Packvolumen 14 bereitstellen, beispielsweise wenn dieses als Kartonage ausgeführt ist, so dass ein Benutzer die Kartonage bis an die Anzeigeeinrichtung 22 heranführen kann, so dass eine Justierung oder Ausrichtung des Packvolumens 14 bezüglich der Anzeigeeinrichtung 22 möglich ist. Eine derartige Justierung kann durch Kontakt mit der Anzeigeeinrichtung 22 bzw. einem anzeigenden Element hiervon erfolgen oder aber mit einem anderen mechanischen Bauteil, das einen vordefinierten Abstand zwischen einem derartigen Anzeigeelement und dem Packvolumen 14 bereitstellt. Die Anzeige benachbart zum Packvolumen erfolgt dabei ausgehend von dem Packtisch in Richtung einer verpackenden Person, etwa parallel oder leicht geneigt zu einer Ebene des Packtisches und mit geringem Abstand zu dem Packvolumen, beispielsweise höchstens 50 cm, höchstens 30 cm oder höchstens 10 cm vom Packvolumen entfernt, etwa in einem Bereich von 5 cm-10 cm.

Die Anzeigeeinrichtung 16 kann ein Steuersignal 26 an die Anzeigeeinrichtung 22 senden, um die Anzeigeeinrichtung 22 zu steuern. Das Steuersignal 26 kann ein beliebiges drahtgebundenes oder drahtloses Signal sein, beispielsweise ein elektrisches Signal, ein optisches Signal oder ein elektromagnetisches Signal.

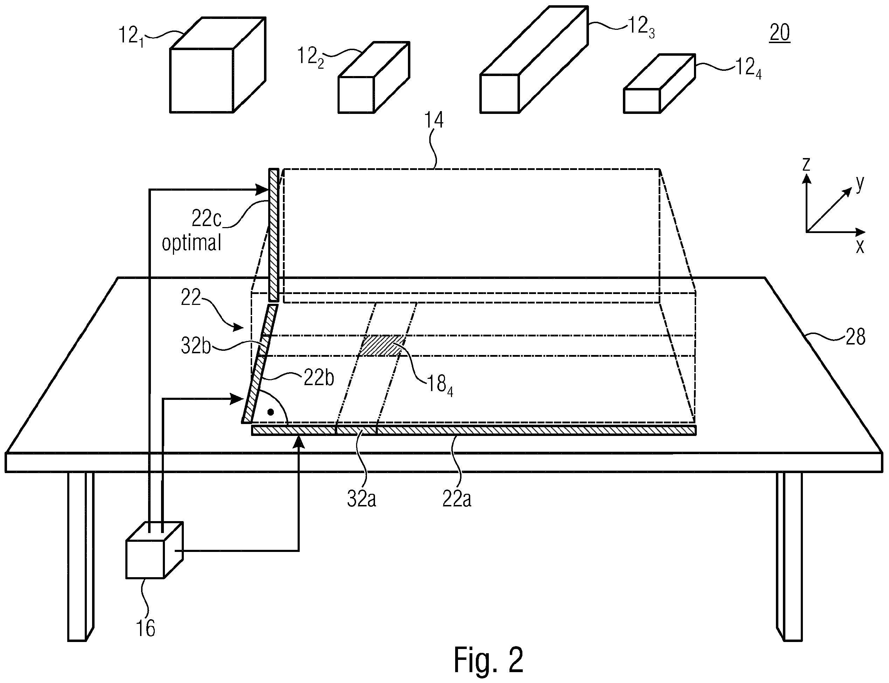

Fig. 2 zeigt eine schematische perspektivische Ansicht eines Packassistenzsystems 20, für das die Erläuterungen im Zusammenhang mit dem Packassistenzsystem 10 gelten und das beispielsweise an oder auf einem Packtisch 28 angeordnet sein kann und zusammen mit dem Packtisch 28 einen Packarbeitsplatz gemäß einem Ausführungsbeispiel bilden kann. Alternativ kann für einen Packarbeitsplatz gemäß hierin beschriebenen Ausführungsbeispielen auch ein anderes Packassistenzsystem verwendet werden.

Die Anzeigeeinrichtung 22 umfasst balkenförmige Anzeigeelemente 22a und 22b, die ein Koordinatensystem für eine Ebene des Packvolumens 14 aufspannen. Die Ebene kann beispielsweise parallel zu einer Tischoberfläche, einem Kartonagenboden oder einem Palettenboden sein, kann basierend auf unterschiedlichen Anforderungen aber auch eine andere Orientierung im Raum aufweisen. Das Koordinatensystem, das durch die Balkenelemente 22a und 22b aufgespannt wird, kann ein kartesisches Koordinatensystem sein, wobei eine rechtwinklige Anordnung der Balkenelemente 22a und 22b zueinander eine von mehreren möglichen Ausgestaltungsformen ist, die beispielsweise an die Form des Verpackungsvolumens 14 anpassbar ist. Anstelle von Balkenelementen kann die Anzeigerichtung 22 auch Flächenelemente oder Elemente anderer Geometrie aufweisen. Die Anzeigeelemente 22a und 22b können ausgebildet sein, um räumlich selektiv bezüglich einer dargestellten oder nicht-dargestellten Farbe und/oder Helligkeit schaltbar zu sein. Beispielsweise kann jedes der Anzeigeelemente 22a, 22b und 22c räumlich selektiv bezüglich zumindest einer Farbe anschaltbar und ausschaltbar sein, so dass basierend auf einer Ansteuerung durch die Steuereinrichtung 16 räumlich selektiv Leuchtbereiche 32a und 32b parallel oder sequenziell nacheinander ansteuerbar sind, um in einer bestimmten Farbe und/oder Helligkeit zu leuchten, während andere Bereiche des jeweiligen Anzeigeelements 22a und 22b von dieser Einstellung abweichen. Beispielsweise können die Anzeigeelemente 22a und 22b so gesteuert werden, dass die Leuchtbereiche 32a und 32b aktiv sind, während andere Bereiche inaktiv sind. Alternativ können die Leuchtbereiche 32a und 32b so gesteuert werden, dass diese in einer bestimmten, bevorzugt intuitiven, Farbe leuchten, beispielsweise in einer ersten Farbe, etwa grün und/oder blau, während andere Bereiche nicht leuchten oder in einer anderen Farbe leuchten, beispielsweise rot oder gelb. Durch die Verwendung eines Koordinatensystems kann eine kombinatorisch durch die Anzeigeelemente 22a und 22b dargestellte Fläche als Ablagebereich $18_4$ wahrgenommen werden, der einem Packobjekt $12_4$ zugeordnet ist bzw. mit diesem assoziiert ist, um einem Benutzer anzuzeigen, dass das Packobjekt $12_4$ in dem Ablagebereich $18_4$ abzulegen ist.

Ausgestaltungen sehen vor, dass durch eine Größe des Ablagebereichs $18_4$ eine Vorgabe an den Benutzer angezeigt wird, welches aus einer Vielzahl von Packobjekten $12_1$ bis $12_4$ er an diesem Ort zu verpacken hat. Gemäß alternativen Ausführungsformen, auf die später eingegangen wird, ist das Packassistenzsystem konfiguriert, um zu erkennen, welches der Packobjekte $12_1$ bis $12_4$ von dem Benutzer für ein Verpacken ausgewählt werden, etwa indem der Benutzer das Packobjekt $12_4$ in die Hand nimmt, wobei das Packassistenzsystem 20 konfiguriert ist, um einen eindeutigen oder einen von mehreren möglichen Ablageorten, die mit dem Packobjekt $12_4$ assoziiert sind, anzuzeigen.

Das optionale Anzeigeelement 22c kann eine dritte Achse des Koordinatensystems aufspannen, beispielsweise eine z-Achse, während die Anzeigeelemente 22a und 22b eine x-Achse und eine y-Achse aufspannen. Beispielsweise kann die Steuereinrichtung 16 konfiguriert sein, um das Anzeigeelement 22 zu steuern, dass dieses ebenfalls räumlich selektiv eine Höhen-Ebene anzeigt, in der das Packobjekt $12_4$ abzulegen ist. Bei geeigneter Wahl eines Packschemas kann jedoch eine derartige Information redundant sein und sich beispielsweise aus der Füllhöhe in dem Packvolumen 14 ergeben. Das Anzeigeelement 22c kann dafür verwendet werden, um einen Fortschritt des Verpackungsvorgangs anzuzeigen, so dass dem Benutzer beispielsweise auch bei lediglich teilweise befülltem Packvolumen 14 eine Information darstellbar ist, dass der Packvorgang abgeschlossen ist, etwa durch vollständiges Leuchten des Anzeigeelements 22c in einer bestimmten Helligkeit und/oder Farbe.

Die Anzeigeelemente 22a-c können longitudinale Anzeigeelemente oder Leuchtmittel sein, was eine longitudinale und beschriebene balkenartige Form umfassen kann aber nicht notwendig ist, solange entlang der jeweiligen Richtung unterschiedliche räumliche Bereiche der longitudinalen Leuchtmittel aktiviert und/oder deaktiviert oder verändert werden können, um den Ablageort darzustellen. Eine mögliche Ausgestaltung sind LED-Leisten mit longitudinale, d. h., entlang der jeweiligen Achse verteilten LED. Alternativ können auch andere Einrichtungen vorgesehen sein, etwa Halogen-Leuchtmittel oder dergleichen. Alternativ kann der räumliche Bereich auch mittels Verdunkelung angezeigt werden, etwa mittels variabler Shutter.

In einer bevorzugten Ausgestaltung umfassen die Anzeigeelemente 22a und 22b sowie das optionale Anzeigeelement 22c jeweils eine Mehrzahl von lichtemittierenden Dioden (LEDs), die sich basierend auf ihrer Erschütterungsfestigkeit und hohen Lebensdauer besonders für den Einsatz in einer industriellen Umgebung eignen. Jedes der Anzeigeelemente 22a, 22b und 22c kann eine gleiche oder abweichende Anzahl von LEDs umfassen. Die LEDs können beispielsweise in einer Reihe entlang der von dem Anzeigeelement 22a, 22b und 22c aufgespannten Richtung angeordnet sein und selektiv ansteuerbar sein, um die entsprechenden Leuchtbereiche 32a und 32b darzustellen. Durch räumlich selektive Aktivierung oder Deaktivierung von LEDs in den Anzeigeelementen 22a, 22b und/oder 22c kann eine entsprechende Information darstellbar sein, das bedeutet, der Ablagebereich und/oder der Verpackungsfortschritt.

Gemäß einem Ausführungsbeispiel ist die Anzeigeeinrichtung 22 konfiguriert, um den Ablagebereich $18_4$ in grüner Farbe anzuzeigen, was dadurch erfolgen kann, dass die Leuchtbereiche 32a und 32b zum Anzeigen des Ablagebereichs $18_4$ in grüner Farbe aktiviert werden.

Gemäß einem Ausführungsbeispiel ist das Packassistenzsystem ausgebildet, um die Anzeigeeinrichtung so zu steuern, dass der Ablageort derart angezeigt wird, dass auch eine räumliche Orientierung des Packobjekts 12 angezeigt wird. So kann die räumlich selektive farbliche Veränderung unter Verwendung einer ersten Farbe erfolgen, die einer ersten Seite des Packobjekts 12 zugeordnet ist. Die erste Seite kann bspw. eine kurze oder lange Seite eines rechteckigen Packobjekts 12 sein. Ferner kann eine zweite Farbe verwendet werden, die einer zweiten Seite des Packobjekts (12) zugeordnet sein, bspw. die lange bzw. kurze Seite, also einer anderen Seitenlänge. Die erste und die zweite Farbe können so anzeigen wie die kurze bzw. lange Seite anzuordnen sind und so eine Orientierung des Packobjekts anzeigen. Als Farben kommen bspw. grün und blau in Betracht, wobei auch beliebige andere Farben verwendet werden können. Die Farben können im zeitlichen Wechsel aber auch gleichzeitig angezeigt werden. Es kann bei der Darstellung der Position mit unterschiedlichen Farben gearbeitet werden. Die längere Seite wird z.B. blau dargestellt, während die kurze Seite grün dargestellt wird. So wird das Verständnis seitens des Verpackers erleichtert, insbesondere wenn man mit fast gleichseitigen Objekten arbeitet.

Zum Steuern der Anzeigeeinrichtung 22 kann die Steuereinrichtung 16 konfiguriert sein, um ein Packschema zu bestimmen, gemäß dem die Packobjekte $12_1$ bis $12_4$ in dem Packvolumen 14 anzuordnen sind. Das Packschema kann von der Steuereinrichtung 16 unter Verwendung von Stammdaten des jeweiligen Packobjekts bestimmt werden. Es ist möglich, jedoch nicht erforderlich, dass die Steuereinrichtung 16 das Packschema so bestimmt, dass eine Reihenfolge, gemäß der die Packobjekte $12_1$ bis $12_4$ in dem Packvolumen 14 abzulegen sind, bestimmt. Auch sind Zwischenformen möglich, bei denen in einem bestimmten Zustand des Verpackungsprozesses mehrere Packobjekte $12_1$ bis $12_4$ als zulässige nächste Packobjekte eingestuft werden, etwa da sie von oben in das Packvolumen 14 geführt werden können und eine Ablage des Packobjekts $12_1$ bis $12_4$ einen späteren Ablagebereich nicht verdeckt. Obwohl die Steuereinrichtung 16 das Packschema gemäß einem Ausführungsbeispiel selbst bestimmen kann, kann die Steuereinrichtung 16 alternativ oder zusätzlich ausgebildet sein, um ein Packschema mitgeteilt zu bekommen, beispielsweise von einer übergeordneten Steuereinrichtung oder einem Benutzer. Das Packassistenzsystem 20 kann konfiguriert sein, um sequenziell nacheinander eine mit der Mehrzahl von Packobjekten $12_1$ bis $12_4$ korrespondierende Mehrzahl von Ablageorten 18 für die Mehrzahl von Packobjekten $12_1$ bis $12_4$ in dem Packvolumen 14 anzuzeigen.

In anderen Worten beschreiben Ausführungsbeispiele eine Low-Cost-Lösung (kostengünstige Lösung) zur Unterstützung des Mitarbeiters bei Packprozessen. Ausführungsbeispiele können unmittelbar in den Arbeitstisch 28 integriert werden und verschiedene logistische Arbeitsvorgänge unterstützen. Im Grundbestandteil von hierin beschriebenen Ausführungsbeispielen sind zwei oder drei Leisten, die mit Aktorik (beispielsweise einfarbige oder vielfarbige LED-Streifen) und gegebenenfalls Sensorik ausgestattet sind. Die Leisten können, wie in Fig. 2 dargestellt, in den Arbeitsplatz 28 integriert werden.

In einer besonders vorurteilhaften Ausgestaltung ist die Anzeigeeinrichtung 22 mit einer Erfassungseinrichtung kombiniert, die konfiguriert ist, um zumindest eine Abmessung, möglicherweise aber auch ein Gewicht, der zu verpackenden Packobjekte $12_1$ bis $12_4$ zu bestimmen, was vorab des Verpackungsprozesses erfolgen kann, um der Steuereinrichtung 16 Informationen bzw. Stammdaten bereitzustellen, aufgrund derer die Steuereinrichtung 16 das Packschema berechnet.

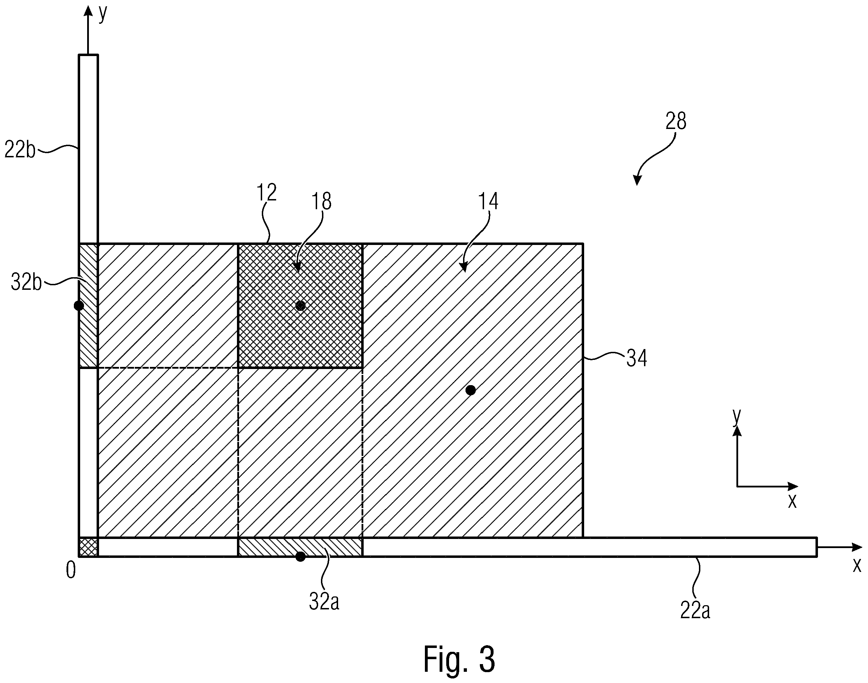

Fig. 3 zeigt eine schematische Aufsicht auf den Packtisch 28 aus Fig. 2, bei dem das Packvolumen 14 beispielsweise durch eine Kartonage 34 räumlich begrenzt ist. Durch Projektion der Leuchtbereiche 32a und 32b entlang der jeweils komplementären Achse y bzw. x kann von der verpackenden Person in dem Überlappbereich der Ablagebereich 18 für das Packobjekt 12 intuitiv wahrgenommen werden, d. h., kombinatorisch wird der Überlappbereich angezeigt. Optional kann eine Darstellung einer Kartonage erfolgen, etwa durch einen entsprechend großen Überlappbereich vor dem Verpackungsprozess, so dass einem Benutzer die Größe oder Art der Kartonage dargestellt werden kann, etwa um zu signalisieren, welche Kartonage aus einer Vielzahl von Möglichkeiten zu wählen ist. So kann zu Beginn des Verpackungsprozesses über die Anzeigeelemente 22a und 22b die Größe der zu wählenden Kartonage angezeigt werden.

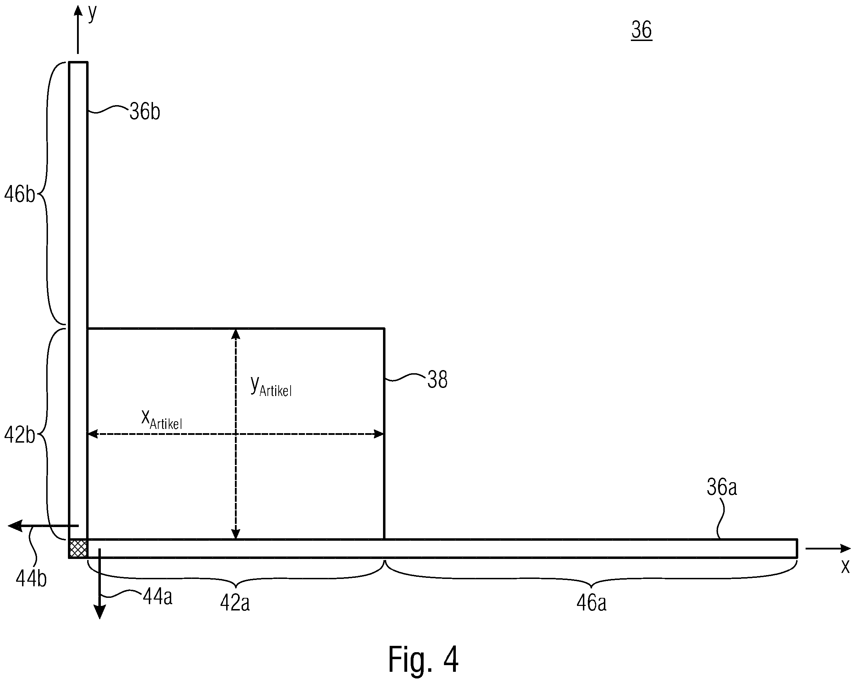

Fig. 4 zeigt eine schematische Aufsicht auf eine Sensoreinrichtung 36, die konfiguriert ist, um eine Abmessung eines Objekts 38, der möglicherweise zu einem späteren Zeitpunkt als Packobjekt in dem Packvolumen 14 zu verpacken ist, entlang zumindest einer Richtung x und/oder y zu erfassen. Hierfür kann die Sensoreinrichtung 38 geeignete Sensorelemente aufweisen, die konfiguriert sind, um eine Anwesenheit des Objekts 38 in einem Anwesenheitsbereich 42a und/oder 42b zu bestimmen und ein hierauf aufbauendes Sensorsignal 44a und/oder 44b auszugeben. In Kenntnis der Ausgestaltung der Sensoreinrichtung 36 bzw. der möglicherweise ebenfalls balkenförmig gebildeten Abschnitte 36a und/oder 36b kann somit der Anwesenheitsbereich 42a und/oder 42b von einem Abwesenheitsbereich 46a und/oder 46b unterschieden werden, wobei eine Kombination des Anwesenheitsbereichs 42a und 46a bzw. 42b und 46b einen Messbereich der Sensoreinrichtung 36 entlang der jeweiligen Richtung x oder y beschreibt. Basierend hierauf kann aus den Sensorsignalen 44a und 44b eine Abmessung $x_{ARTIKEL}$ und $y_{ARTIKEL}$ bestimmt werden.

Gemäß einer vorteilhaften Ausgestaltung spannen die Balken 36a und 36b ein gleiches oder zumindest geometrisch ähnliches Koordinatensystem auf wie die Anzeigeeinrichtung 22. Wie es nachfolgend erläutert ist, können die Elemente 36a und 36b mit den Anzeigeelementen 22a und 22b kombiniert oder integriert werden, um eine einfache Überführung der beiden Koordinatensysteme ineinander zu ermöglichen. Die Sensoreinrichtung 36 kann konfiguriert sein, um eine Abmessung des Objekts 38 zu erfassen und die Sensorsignale 44a und 44b oder ein kombiniertes Sensorsignal so bereitzustellen, dass dieses die Abmessung des Objekts 38 entlang beider Richtungen, d. h., 2D, angibt. Das bedeutet, ein erstes Sensorsignal der Sensoreinrichtung 36 kann eine erste Abmessung des Objekts 38 in der dargestellten Orientierung in der x-y-Ebene angeben. Nach einer Rotation des Objekts 38 kann eine zweite Abmessung des Objekts 38 in einer zweiten Orientierung in der x-y-Ebene angegeben werden. Die Steuereinrichtung kann basierend auf einer Kombination dieser beiden Sensorsignale /Informationen die Stammdaten bestimmen.

Die Steuereinrichtung 16 kann ausgebildet sein, um Stammdaten des Objekts 38 basierend auf dem Sensorsignal 44a und/oder 44b zu bestimmen. Durch die Verwendung der Sensorbalken 36a und 36b kann die Abmessung des Objekts 38 entlang zweier Richtungen gleichzeitig erfasst werden, so dass durch einmaliges Rotieren des Objekts 38 und erneutes Erfassen auch die dritte Raumkomponente erfassbar ist, beispielsweise basierend auf einer 90°-Rotation um die y-Achse oder die x-Achse. Gemäß alternativen Ausführungsbeispielen ist es ebenfalls möglich, auch ein zusätzliches Sensorbalkenelement anzuordnen, das entlang der z-Richtung angeordnet ist, so dass durch einmaliges Erfassen die dreidimensionale Ausdehnung des Objekts 38 erfassbar ist, was eine schnelle Messung ermöglicht. Alternativ ist es ebenfalls möglich, dass lediglich das Balkenelement 36a oder 36b verwendet wird, um zu einem Zeitpunkt ein Sensorsignal zu erhalten. Zwar erfordert dies eine dreimalige Messung einer Röntgenkomponente zum Erhalt der 3D-Objektdaten, allerdings ermöglicht dies eine einfache Ausgestaltung der Sensoreinrichtung 36.

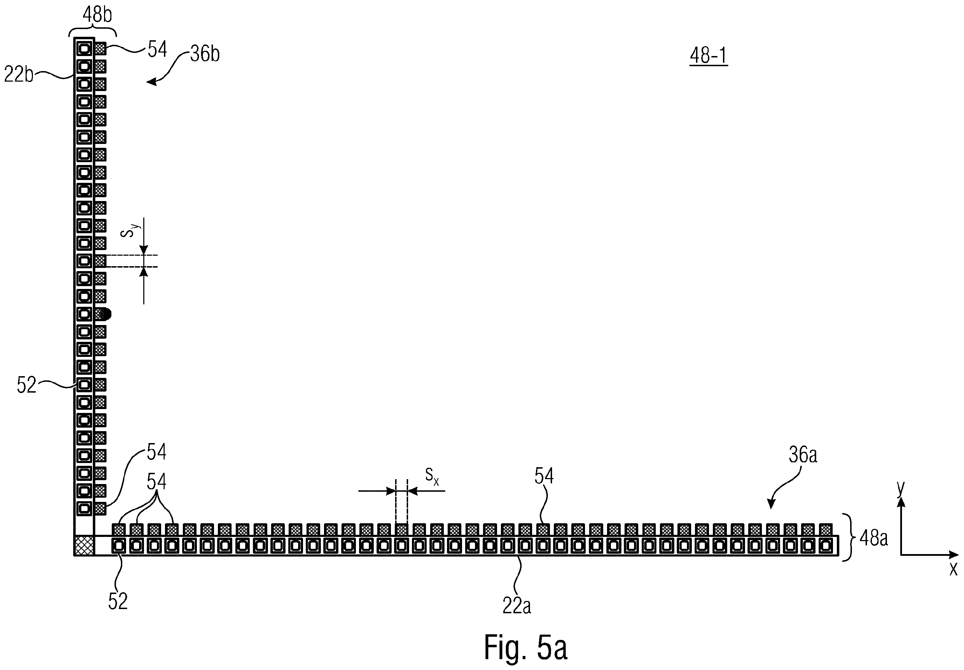

Fig. 5a zeigt eine schematische Aufsicht auf eine kombinierte Einrichtung 48-1 mit Elementen 48a und 48b, die beispielsweise balkenförmig gebildet sind und optional ein drittes Balkenelement aufweisen können, wie es im Zusammenhang mit der Fig. 2 beschrieben ist. Die Elemente 48a und 48b umfassen beispielsweise die Anzeigeelemente 22a bzw. 22b mit einer Vielzahl von LEDs 52. Die Anzeigeelemente 22a und 22b können somit Leisten mit einzeln schaltbaren, farbigen LEDs sein. Die Anzeigeelemente können zusammen einstückig gebildet sein oder als separate Komponenten ausgeführt sein.

Ferner umfassen die Balken 36a und 36b jeweils eine Vielzahl von Sensorelementen 54, die konfiguriert sind, um eine Anwesenheit des Objekts 38 zu erfassen. Die Sensorelemente 54 können an oder in den LED-Leisten der Anzeigeeinrichtung angeordnet sein. Die Sensorelemente können bspw. als Näherungssensoren bzw. Photosensoren implementiert sein.

Entlang der Richtung x weisen die Sensorelemente 54 des Balkens 36a eine Abmessung von $s_x$ auf, während die Sensorelemente 54 des Balkens 36b entlang der Richtung y eine Abmessung von $s_y$ aufweisen, wobei die Abmessungen innerhalb der Balken 36a und/oder innerhalb der Balken 36b gleich oder voneinander verschieden sein kann. Auch kann die Abmessung $s_x$ und die Abmessung $s_y$ gleich sein. Eine Anzahl von Sensorelementen 54, die eine Anwesenheit des Objekts 38 anzeigen, kombiniert mit der Abmessung $s_x$ bzw. $s_y$ kann die jeweilige Abmessung $x_{ARTIKEL}$ bzw. $y_{ARTIKEL}$ anzeigen, so dass gelten kann, dass

$$x_{ARTIKEL} = n_x \cdot s_x$$

$$y_{ARTIKEL} = n_y \cdot s_y$$

wobei $n_x$ und $n_y$ die Anzahl der Sensorelemente 54 angibt, die die Anwesenheit des Objekts 38 erfasst. Die Abmessungen $n_x$ und $s_y$ können hierbei eventuelle Abstände zwischen den einzelnen Sensorelementen 54 mitberücksichtigen.

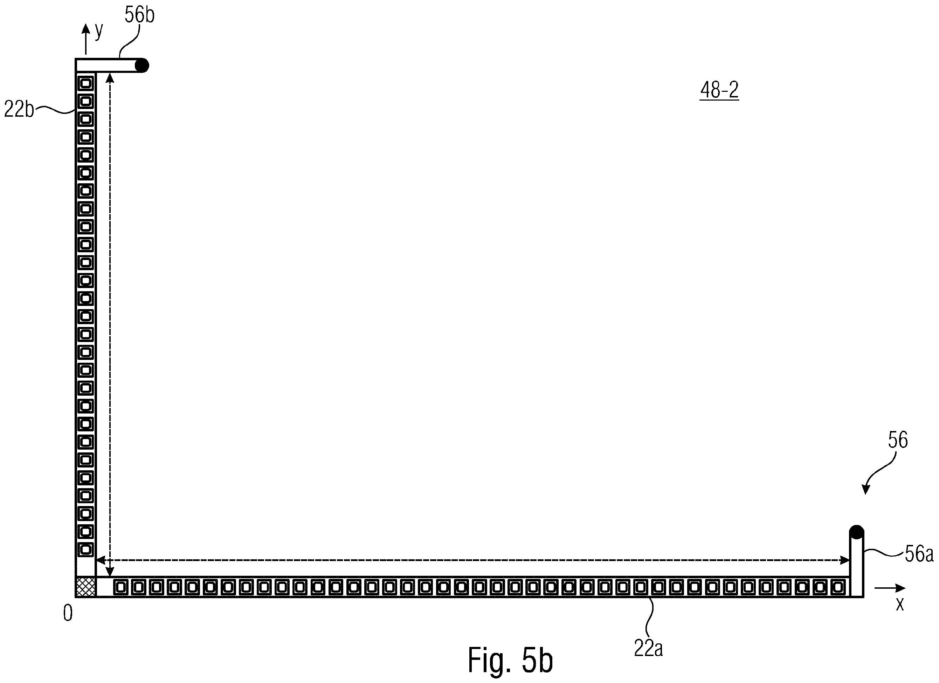

Fig. 5b zeigt eine schematische Aufsicht auf eine kombinierte Einrichtung 48-2, bei der die Anzeigeelemente 22a und 22b der Anzeigeeinrichtung 22 um Distanzsensoren 56a bzw. 56b einer Sensoreinrichtung 58 erweitert sind. Die Distanzsensoren 56a und 56b sind konfiguriert, um einen freien Abstand zwischen einem nächsten Objekt und den Distanzen 56a bzw. 56b zu erfassen, der sich bei Anwesenheit des Objekts 38 verringert, so dass entsprechende Sensorsignale beispielsweise die Abwesenheitsbereiche 46a und 46b angeben. Die Distanzsensoren 56a und 56b können beispielsweise auf einer Time-auf-Flight-Basis (Zeitmessung für ausgesendetes und reflektiertes Licht) implementiert sein. Alternativ oder zusätzlich können auch Lasersensoren verwendet werden. Die Distanzsensoren 56a und 56b können hierfür Photodetektoren umfassen, wobei die Sensoreinrichtung 36 und die Sensoreinrichtung 58 ausgebildet sind, um die Anwesenheit des Objekts 38 in der Nähe der Sensoreinrichtung zu erfassen.

In anderen Worten werden für die Verpackungsoptimierung die Maße der zu verpackenden Objekte benötigt. Diese Informationen liegen insbesondere bei kleineren Unternehmen, die über keine durchgehende IT-Unterstützung (IT = Informationstechnologie) verfügen, oft nicht vor. Die hier beschriebenen Ausführungsbeispiele sind in der Lage, mit den am Arbeitsplatz integrierten Komponenten und der integrierten Sensorik die Maße der zu messenden Objekte zu erfassen und in einem IT-System zu hinterlegen. Hierbei können über die Sensorik beispielsweise zwei Längenparameter erfasst werden, etwa entlang der x-Achse und der y-Achse. Durch das Kippen des Objekts um 90° kann die dritte Länge (z-Achse) erfasst werden. Ausführungsbeispiele sehen alternativ oder zusätzlich die Verwendung einer Kamera vor, die das Verpackungsdesign und/oder eventuell vorhandene Identifizierungsmerkmale, etwa Barcodes, des Objekts erfassen und im IT-System hinterlegen. Die Funktionen des Messens kann über verschiedene Möglichkeiten umgesetzt werden, die beispielhaft anhand der Fig. 5a und 5b erläutert sind.

Um Waren optimal innerhalb einer Versandkartonage platzieren zu können, kann zuvor ein Packschema berechnet werden, das verschiedene Parameter für die Schemaerstellung heranzieht. Auf der einen Seite geht es darum, eine minimale Kartonage für den Versand zu wählen. Auf der anderen Seite soll die gewählte Kartonage optimal ausgenutzt werden. Hierfür ist wichtig, in welcher Ausrichtung und in welcher Position innerhalb der Kartonage die einzelnen Waren platziert werden.

Ausführungsbeispiele nutzen Anzeigeleisten für eine minimale Informationsdarstellung. Über die Leisten auf der x-Achse und y-Achse werden die Kantenlängen sowie die Position der zu verpackenden Ware über Leuchtsignale dargestellt. Die Informationsdarstellung kann so gewählt werden, dass eine intuitive Durchführung des Verpackungsprozesses ermöglicht ist und auch den Einsatz einer separaten Informationsdarstellung, etwa über ein Display, verzichtet werden kann. Über die Leiste auf der z-Achse können zusätzliche Informationen, etwa ein Verpackungsfortschritt, dargestellt werden. Die Darstellung der Information für die Platzierung der Ware in der Kartonage ist in Fig. 3 exemplarisch erklärt.

In anderen Worten enthalten die Leisten vielfarbige, einzeln schaltbare LEDs, die sich mit geringem Abstand zueinander befinden. Je geringer der Abstand der einzelnen LEDs ist, desto größer ist die abbildbare Auflösung. In der Variante gemäß Fig. 5a befinden sich an den Innenkanten der Leisten ein Array an Photodioden oder Näherungssensoren, die in geringem Abstand zueinander über die gesamte Länge der Leisten angebracht sind. Sowohl die Sensoren als auch die LEDs sind mit einer gemeinsamen Steuereinheit verbunden, die Längen sowie Sensorwerte umrechnen und auch die LED-Darstellung übertragen kann.

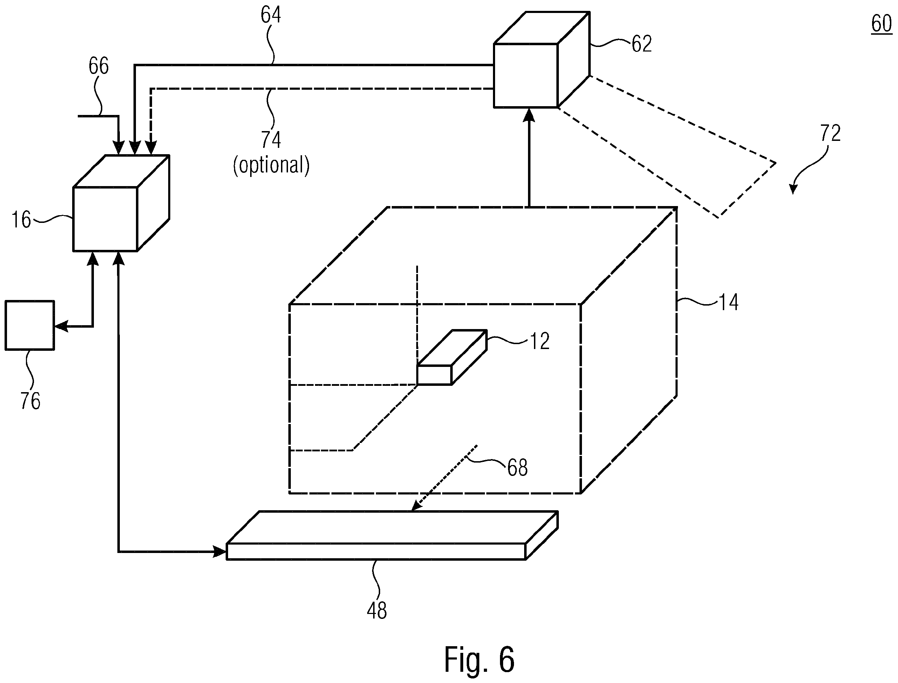

Fig. 6 zeigt eine schematische perspektivische Ansicht eines Packassistenzsystems 60 gemäß einem Ausführungsbeispiel, bei dem die Anzeigeeinrichtung Teil der kombinierten Einrichtung 48, beispielsweise 48-1 oder 48-2 ist, wobei alternativ auch die Anzeigeeinrichtung 22 angeordnet sein kann. Die kombinierte Einrichtung 48 kann der Steuereinrichtung 16 Informationen über vermessene Objekte bereitstellen, beispielsweise das Objekt 38, das nach Berechnen des Packschemas als Packobjekt 12 in dem Packvolumen 14 anzuordnen ist. Das Packassistenzsystem 60 umfasst ferner eine Erfassungseinrichtung 62, die ausgebildet ist, um den Packbereich 14 zu erfassen, und um der Steuereinrichtung 16 ein Erfassungssignal 64 bereitzustellen. Das Erfassungssignal 64 kann eine Information bezüglich eines tatsächlichen Orts oder Bereichs, in welchem ein Objekt 12 in dem Packvolumen 14 angeordnet ist, bereitstellen. Die Erfassungseinrichtung 62 kann beispielsweise eine Kamera umfassen. Die Steuereinrichtung 16 kann ausgebildet sein, um basierend auf dem erfassten Signal 64 die Position des Parkobjekts 12 in den Packbereich 14 zu erfassen. Die Steuereinrichtung 16 kann die bestimmte Position mit dem zuvor bestimmten Packschema vergleichen und kann die Anzeigeeinrichtung so steuern, dass diese anzeigt, ob die Position des Packobjekts 12 in dem Packbereich 14 mit dem zuvor bestimmten Packschema übereinstimmt. Das bedeutet, die Steuereinrichtung 16 ist ausgebildet, um den tatsächlichen Ablageort mit dem zuvor bestimmten und über die Anzeigeeinrichtung angezeigten Ablagebereich zu vergleichen und um eine Übereinstimmung und/oder Abweichung anzuzeigen. Beispielsweise kann eine Übereinstimmung durch eine grüne und/oder blaue Farbdarstellung in der Anzeigeeinrichtung und/oder eine Abweichung durch eine rote Farbdarstellung angezeigt werden. Es kann hierbei bspw. die gleiche Farbkombination verwendet werden, die auch für die Anzeige des Ablageorts verwendet wird, wobei auch andere Farben und/oder Farbkombinationen möglich sind. Der Vergleich kann durch eine Benutzereingabe ausgelöst werden, etwa indem der Benutzer dem Packassistenzsystem 60 anzeigt, dass er das Packobjekt 12 in dem Packvolumen 14 abgelegt hat. Ein derartiges Eingangssignal 66 kann durch Drücken einer Taste, Betätigen eines sonstigen Steuerelements und/oder eine Gestensteuerung erfolgen. Die Verwendung der Erfassungseinrichtung 62 kann beispielsweise vorteilhaft sein, wenn die Sensoreinrichtung der kombinierten Vorrichtung 48 lediglich in einer Ebene nahe des Verpackungstisches wirksam ist, so dass in höheren Ebenen die entsprechenden Näherungssensoren ungenaue oder keine Informationen liefern. Abgesehen hiervon kann alternativ oder zusätzlich zur Erfassungseinrichtung 62 auch die Sensoreinrichtung der kombinierten Einrichtung 48 verwendet werden, um eine Information 68 über den tatsächlichen Ablageort des Packobjekts 12 in dem Packvolumen 14 zu erhalten.

Die Erfassungseinrichtung 62 kann auch während der Vermessung des Objekts verwendet werden, um das Verpackungsdesign und/oder den Identifizierungsparameter, etwa Farbe, Barcode, QR-Code, Logo oder dergleichen zu erfassen.

Die Erfassungseinrichtung 62 kann mit demselben oder einem weiteren Erfassungselement, beispielsweise eine Kamera, einen Bereich 72 benachbart zu dem Packvolumen 14 erfassen oder überwachen und der Steuereinrichtung 16 ein optionales Zustandssignal 74 bereitstellen, das eine Information darüber aufweist, welches der zu verpackenden Packobjekte der Benutzer gerade aufgenommen hat, beispielsweise von einem Produktstapel. Dies ermöglicht der Steuereinrichtung 16 zu bestimmen, welches Objekt der Benutzer als nächstes verpacken möchte und ermöglicht eine Ansteuerung der Anzeigeeinrichtung dergestalt, dass eine Information über den dem aktuell ausgewählten Packobjekt zugeordneten Ablagebereich dargestellt wird. Hierfür können die zuvor erfassten Verpackungsdesigns und/oder Identifizierungsparameter von der Steuereinrichtung 16 ausgewertet werden, die beispielsweise in einem Datenspeicher 76 gespeichert sind, auf die die Steuereinrichtung 16 Zugriff hat. Diese Informationen können von der Steuereinrichtung 16 in dem Datenspeicher 76 gespeichert werden, während die Objekte vermessen werden. Das bedeutet, dass das optionale Zustandssignal 74 anzeigen kann, welches Packobjekt gerade verpackt wird, während das Erfassungssignal 64 anzeigt, wo das Packobjekt abgelegt ist. Basierend auf dem Zustandssignal 74 kann die Steuereinrichtung 16 konfiguriert sein, dem Ablagebereich gemäß der Zuordnung in dem Packschema anzuzeigen. Das Packassistenzsystem kann somit ausgebildet sein, um eine Überprüfung einer Position des Packobjekts 12 in dem Packvolumen 14 bezüglich des zuvor bestimmten Packschemas auszuführen.

Die Anzeige des Ablageorts und/oder die Überprüfung, ob der tatsächliche Ablageort korrekt gewählt wurde, können mit akustischen Signale kombiniert werden. Bspw. kann die Steuereinrichtung 16 ausgebildet sein, um dem Nutzer eine Angabe darüber akustisch mitzuteilen, welcher Artikel als nächstes zu verpacken ist und/oder ob der Artikel korrekt abgelegt wurde. Es können bspw. Mit Sprach- oder Tonausgaben bzw. Spracheingaben verwendet werden. Bspw. können Packanweisungen (also, was gepackt werden soll) akustisch erfolgen. Alternativ oder zusätzlich kann die Bestätigung eines Verpackungsschrittes neben der Bestätigung über einen Knopf oder eine Handgeste auch über Spracheingabe erfolgen. Alternativ oder zusätzlich kann die Bestätigung des Ablageorts akustisch erfolgen. Das Packsystem kann ausgebildet sein, um ein zu packendes Packobjekt und/oder einen Ablageort und/oder eine Bestätigung eines korrekten Ablageorts akustisch auszugeben und/oder um eine akustische Eingabe, dass das Packobjekt 12 abgelegt wurde, akustisch zu empfangen.

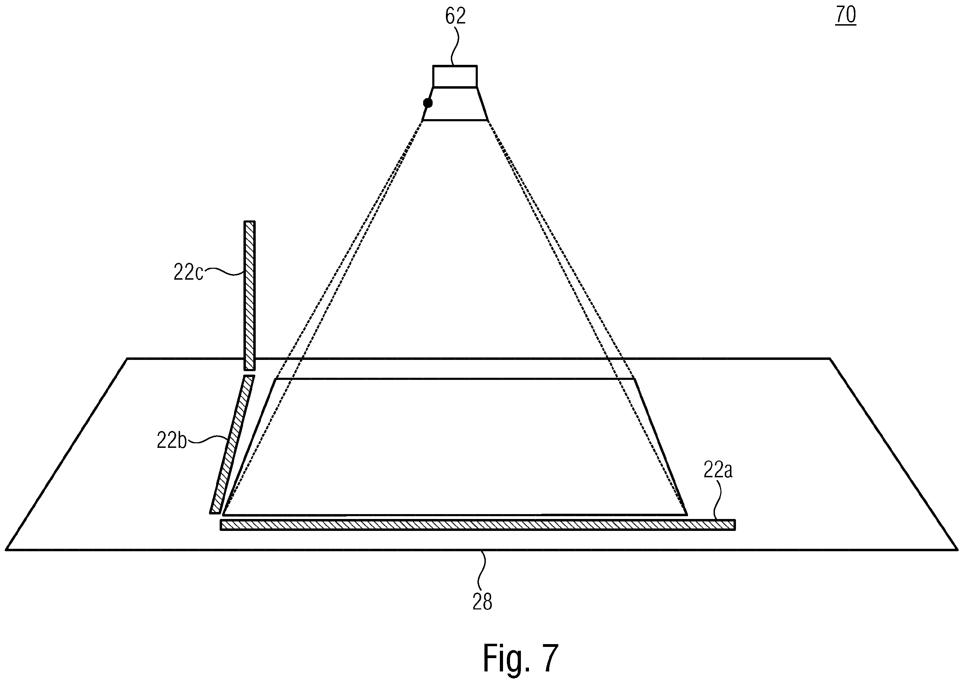

Fig. 7 zeigt eine schematische perspektivische Ansicht eines Packarbeitsplatzes 70 gemäß einem Ausführungsbeispiel, bei dem die Anzeigeeinrichtung 22 in Kombination mit der Erfassungseinrichtung 62 angeordnet ist, wobei auch ein beliebiges anderes Packassistenzsystem gemäß hierin beschriebener Ausführungsbeispiele angeordnet sein kann. Die Erfassungseinrichtung 62 ist als Kamera zur Dokumentation sowie Überprüfung des Verpackungsvorgangs angeordnet und beispielsweise auf den Packtisch 28 gerichtet.

In anderen Worten kann über eine auf den Tisch 28 gerichtete Kamera 62 sowohl die Prozessüberwachung als auch die Dokumentation des Verpackungsprozesses durchgeführt werden. Durch den Einsatz bildgebender Verfahren kann die Steuereinheit erfassen, ob die zu verpackenden Objekte entsprechend dem zuvor berechneten Packschema platziert wurden. Ist dies der Fall, wird der nächste Prozessschritt angestoßen. Ist dies nicht der Fall, wird über die Leisten eine Fehlanmeldung angestoßen. Jeder Prozessschritt wird automatisch durch die Kamera dokumentiert. Auf Basis der zuvor erfassten Stammdaten kann ohne den Einsatz eines Handscanners die Kamera anhand des aufgebrachten Barcodes bzw. der Gestaltung der Verpackung erkennen, welches Objekt gerade verpackt wird. Auf diese Weise wird immer genau die Platzierungsinformation dargestellt, die zu dem soeben gegriffenen Objekt gehört. Ausführungsbeispiele weisen dabei folgende Grundkomponenten auf:

-    Leisten mit Aktorik (Darstellung) und gegebenenfalls Sensorik
-    Sensorikvariante 1: Näherungssensorik oder Photodiode als Array auf der Innenseite der Leisten angebracht, um angelegte Objekte zu erkennen und vermessen zu können, siehe Fig. 5a
-    Sensorikvariante 2: Distanzsensoren an den Enden der Leisten, die angelegte Objekte vermessen können, siehe Fig. 5b

- Aktorik: Leuchtmittel, das sowohl die Wahl der Kartonage als auch die Platzierung der Objekte in der Kartonage über eine Matrixdarstellung visualisiert. Darüber hinaus werden positive oder negative Rückmeldungen an den Benutzer über die Aktorik dargestellt, etwa grünes oder rotes Blinken
- es besteht die Möglichkeit der Benutzereingabe, etwa über einen Druckknopf zum Erzeugen des Eingangssignals 66
- eine Kamera dient zur Prozessüberprüfung, Objekterkennung und Prozessdokumentation
- Eine Steuereinheit wird für die Verknüpfung der Einzelkomponenten eingesetzt.

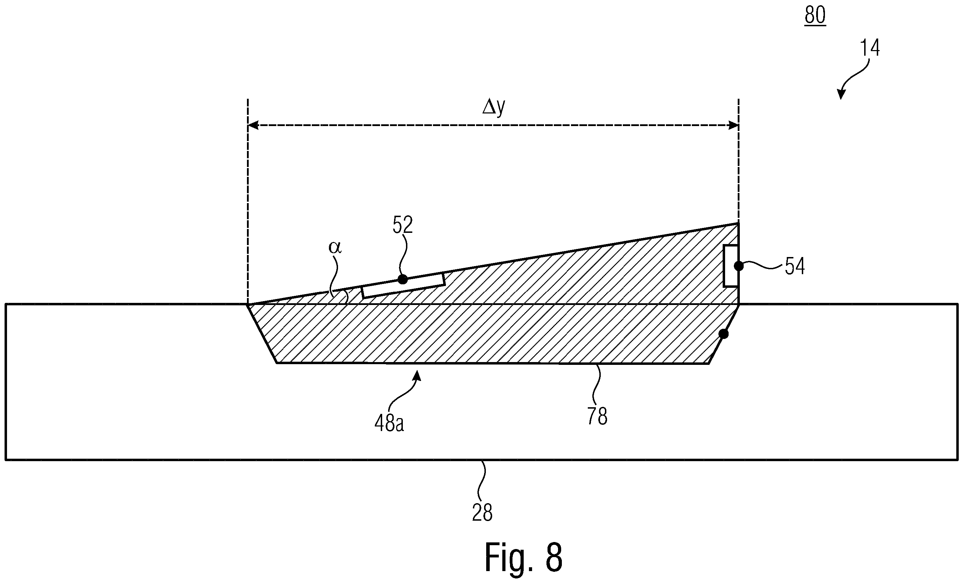

Fig. 8 zeigt eine schematische Seitenschnittansicht eines Packarbeitsplatzes 80 gemäß einem Ausführungsbeispiel, bei dem das Teil 48a und/oder 48b als kombinierte Einrichtung angeordnet ist und einen Rahmen 78 aufweist, an dem die LEDs 52 oder ein anderes darstellendes Element der Anzeigeeinrichtung 22 gegenüber einer Oberfläche des Packtisches 28 um einen Winkel α von zumindest 1° und höchstens 45°, zumindest 2° und höchstens 35° oder zumindest 10° und höchstens 30° geneigt ist, um eine gute und einfache Wahrnehmung durch den Benutzer zu ermöglichen. An einer dem Packvolumen 14 zugewandten Seite des Rahmens 78 sind die Sensorelemente 54 angeordnet. Das Element 48a kann in den Packtisch 28a integriert werden, etwa in eine Vertiefung desselben. Alternativ kann auch eine Anordnung an einer ebenen Oberfläche erfolgen. Die Integration kann dabei als nachrüstbares und/oder modular, etwa als abnehmbares Modul erfolgen, was eine einfache Nachrüstung ermöglicht. Alternativ kann eine feste Integration, bspw. in die Tischplatte des Verpackungstisches erfolgen, was eine unbeabsichtigte Entfernung oder Verschiebung verhindern kann.

Ausführungsbeispiele ermöglichen den Vorteil einer einfachen visuellen Darstellung der Packschemata über Lichtsignale, die direkt am Verpackungstisch angebracht werden können. Gegenüber bekannten Lösungen bieten Ausführungsbeispiele die Vorteile, dass diese nachrüstbar für bestehende Verpackungstische sind, dass ein einfacher technischer Aufbau implementiert werden kann, dass die Ausführungsbeispiele kostengünstig implementierbar sind und mit beliebiger Software zur Verpackungsoptimierung kombinierbar sind. Es wird eine hohe Prozesssicherheit durch eine kamerabasierte Überprüfung erhalten.

Ausführungsbeispiele können in den Prozessschritten der Verpackung sowie im Wareneingang im Rahmen der Stammdatenerfassung angewendet werden. Durch den einfachen Aufbau, die Nachrüstbarkeit und die vollständige Integration in die Arbeitsplatte können mit Ausführungsbeispielen ausgestattete Tische sowohl im Wareneingang als auch im Warenausgang genutzt werden. Ein Umbau des Tisches bzw. des Systems ist hierfür nicht notwendig. Insbesondere für die Verpackungsprozesse bei Online-Händlern oder Versandhäusern mit heterogenem Produktsortiment mit geringer Stammdatenqualität ist ein System gemäß den hierin beschriebenen Ausführungsbeispielen geeignet. Durch die Kombination der Fähigkeit sowohl den Verpackungsprozess zu unterstützen als auch eine grundlegende Stammdatenerfassung anzubieten, bietet ein Konzept gemäß hierin beschriebener Ausführungsbeispiele doppelten Mehrwert. Weiter ist das System so konzipiert, dass es sich mit geringem Aufwand in bestehende Packtische integrieren lässt, somit ist eine kostengünstige Nachrüstung möglich, was das System auch für kleine und mittlere Unternehmen interessant macht.

Im Folgenden werden zusätzliche Ausführungsbeispiele und Aspekte der Erfindung beschrieben, die einzeln oder in Kombination mit beliebigen der hierin beschriebenen Merkmale, Funktionalitäten und Einzelheiten verwendet werden können.

Gemäß einem ersten Aspekt kann ein Packassistenzsystem 10; 20 zur Unterstützung eines Verpackens zumindest eines Packobjekts 12 in ein Packvolumen 14 Folgendes umfassen: eine Steuereinrichtung 16, die ausgebildet ist, um einen Ablagebereich 18 für das zumindest eine Packobjekt 12 in dem Packvolumen 14 zu bestimmen; und eine an dem Packvolumen ausgerichtete Anzeigeeinrichtung 22; 48, die ausgebildet ist, um den Ablagebereich 18 anzuzeigen, wobei die Anzeigeeinrichtung 22; 48 benachbart zu dem Packvolumen 14 angeordnet ist.

Gemäß einem zweiten Aspekt unter Rückbezug auf den ersten Aspekt kann die Anzeigeeinrichtung 22; 48 zumindest zwei balkenförmige Anzeigeelemente 22a, 22b, 22c umfassen, die ein Koordinatensystem für eine Ebene des Packvolumens 14 aufspannen.

Gemäß einem dritten Aspekt unter Rückbezug auf den ersten oder zweiten Aspekt kann die Anzeigeeinrichtung 22; 48 ausgebildet sein, um den Ablagebereich 18 durch eine räumlich selektive farbliche Veränderung eines Anzeigeelementes 22a, 22b, 22c anzuzeigen.

Gemäß einem vierten Aspekt unter Rückbezug auf den dritten Aspekt kann die Anzeigeeinrichtung so angeordnet sein, dass Anzeigeelemente 22a, 22b, 22c ein Koordinatensystem mit zumindest zwei Achsen x, y für eine Ebene des Packvolumens 14 aufspannen und die Anzeigeeinrichtung 22; 48 ausgebildet ist, um die räumlich selektive farbliche Veränderung in Bereichen 32 der Achsen anzuzeigen, die gemeinsam den Ablageort 18 in der Ebene darstellen.

Gemäß einem fünften Aspekt unter Rückbezug auf den dritten oder vierten Aspekt kann das Packassistenzsystem ausgebildet sein, um die räumlich selektive farbliche Veränderung unter Verwendung einer ersten Farbe, die einer ersten Seite des Packobjekts 12 mit einer ersten Seitenlänge zugeordnet ist, und unter Verwendung einer zweiten Farbe, die einer zweiten Seite des Packobjekts 12 mit einer zweiten, verschiedenen Seitenlänge zugeordnet ist, auszuführen, so dass die erste und die zweite Farbe eine Orientierung des Packobjekts anzeigen.

Gemäß einem sechsten Aspekt unter Rückbezug auf den fünften Aspekt kann das Packassistenzsystem ausgebildet sein, um die erste Farbe und die zweite Farbei gleichzeitig anzuzeigen.

Gemäß einem siebten Aspekt unter Rückbezug auf einen des ersten bis sechsten Aspekts kann die Anzeigeeinrichtung 22; 48 zumindest ein erstes longitudinales Leuchtmittel 22a und ein zweites longitudinales Leuchtmittel 22b umfassen, die konfiguriert sind, um in einer Anordnung senkrecht zu einander ein Koordinatensystem für eine Ebene des Packvolumens 14 aufzuspannen und durch räumlich selektive Aktivierung oder Deaktivierung von räumlichen Bereichen der longitudinalen Leuchtmittel den Ablageort 18 in der Ebene darzustellen.

Gemäß einem achten Aspekt unter Rückbezug auf den siebten Aspekt kann/können das erste und/oder das zweite longitudinale Leuchtmittel 22a-b eine LED-Leiste mit einer Mehrzahl von LEDs 52 umfassen und durch räumlich selektive Aktivierung oder Deaktivierung von LEDs 54 den räumlichen Bereich darstellen.

Gemäß einem neunten Aspekt unter Rückbezug auf den siebten oder achten Aspekt kann das Packassistenzsystem ein drittes longitudinales Leuchtmittel aufweisen, das konfiguriert ist, um bei einer Anordnung senkrecht zu dem ersten longitudinalen Leuchtmittel und dem zweiten longitudinalen Leuchtmittel eine dritte Achse z des Koordinatensystems darzustellen und/oder einen Verpackungsfortschritt darzustellen.

Gemäß einem zehnten Aspekt unter Rückbezug auf einen des ersten bis neunten Aspekts kann die Anzeigeeinrichtung 22; 48 ausgebildet sein, um den Ablagebereich 18 in einer dem Ablagebereich zugeordneten Farbe anzuzeigen.

Gemäß einem elften Aspekt unter Rückbezug auf einen des ersten bis zehnten Aspekts kann der Ablageort 18 dem Packobjekt 12 gemäß einem Packschema zugeordnet sein, wobei das Packassistenzsystem eine Erfassungseinrichtung 62 aufweisen kann, die ausgebildet ist, um das Packvolumen 14 zu erfassen, und um der Steuereinrichtung 16 ein Zustandssignal 74 bereitzustellen, das eine Information bezüglich einer Identifikation eines Packobjekts 12 aufweist, wobei die Steuereinrichtung 16 konfiguriert sein kann, um basierend auf dem Zustandssignal 74 den Ablagebereich 18 gemäß der Zuordnung in dem Packschema anzuzeigen.

Gemäß einem zwölften Aspekt unter Rückbezug auf einen des ersten bis elften Aspekts kann die Steuereinrichtung 16 ausgebildet sein, um ein Packschema für das zumindest eine Packobjekt 12 in dem Packvolumen 14 unter Verwendung von Stammdaten des Packobjekts 12 zu bestimmen.

Gemäß einem dreizehnten Aspekt unter Rückbezug auf einen des ersten bis zwölften Aspekts kann das Packassistenzsystem ferner eine Sensoreinrichtung 36; 58 umfassen, die konfiguriert ist, um eine Abmessung des Packobjekts 12 zu erfassen und ein Sensorsignal bereitzustellen, das die Abmessung angibt, wobei die Steuereinrichtung 16 ausgebildet sein kann, um Stammdaten des zumindest einen Packobjekts 12 basierend auf dem Sensorsignal zu bestimmen.

Gemäß einem vierzehnten Aspekt unter Rückbezug auf den dreizehnten Aspekt kann die Sensoreinrichtung 36; 58 ausgebildet sein, um die Abmessung in einer Ebene x/y zu erfassen, wobei ein erstes Sensorsignal eine erste Abmessung des Packobjekts 12 in einer ersten Orientierung in der Ebene x/y angibt, und ein zweites Sensorsignal eine zweite Abmessung des Packobjekts 12 in einer zweiten Orientierung in der Ebene x/y angibt, wobei die Steuereinrichtung 16 ausgebildet sein kann, um die Stammdaten basierend auf einer Kombination des ersten Sensorsignals und des zweiten Sensorsignals zu bestimmen.

Gemäß einem fünfzehnten Aspekt unter Rückbezug auf den dreizehnten oder vierzehnten Aspekt kann die Sensoreinrichtung 16 eine Mehrzahl von Näherungssensoren und/oder eine Mehrzahl von Photodetektoren umfassen, die ausgebildet sind, um eine Anwesenheit des Packobjekts 12 in einer Nähe der Sensoreinrichtung 36; 58 zu erfassen.

Gemäß einem sechzehnten Aspekt unter Rückbezug auf einen des dreizehnten bis fünfzehnten Aspekts können die Sensoreinrichtung 36; 58 und die Anzeigeeinrichtung 22 in einer gemeinsamen Einrichtung 48 angeordnet sein.

Gemäß einem siebzehnten Aspekt unter Rückbezug auf einen des dreizehnten bis sechzehnten Aspekts kann die Anzeigeeinrichtung 22; 48 zumindest ein erstes und ein zweites longitudinales Leuchtmittel 22a, 22b, 22c umfassen und kann die Sensoreinrichtung 36; 58 eine Mehrzahl von Sensorelementen 54 umfassen, die an dem ersten longitudinalen Leuchtmittel 22a und dem zweiten longitudinalen Leuchtmittel 22b angeordnet sind.

Gemäß einem achtzehnten Aspekt unter Rückbezug auf einen des dreizehnten bis siebzehnten Aspekts kann eine Kamera 62 angeordnet sein, um ein Verpackungsdesign und/oder einen Identifizierungsparameter des Packobjekts 12 zu erfassen und der Steuereinrichtung 16 bereitzustellen.

Gemäß einem neunzehnten Aspekt unter Rückbezug auf einen des ersten bis achtzehnten Aspekts kann das Packassistenzsystem ausgebildet sein, um eine Überprüfung einer Position des Packobjekts 12 in dem Packvolumen 14 bezüglich eines zuvor bestimmten Packschemas auszuführen.

Gemäß einem zwanzigsten Aspekt unter Rückbezug auf den sechzehnten Aspekt kann das Packassistenzsystem eine Erfassungseinrichtung 62 aufweisen, die ausgebildet ist, um das Packvolumen 14 zu erfassen, und um der Steuereinrichtung 16 ein Erfassungssignal 64 bereitzustellen, wobei die Steuereinrichtung 16 ausgebildet sein kann, um basierend auf dem Erfassungssignal 64 die Position des Packobjekts 12 in dem Packvolumen 14 zu erfassen und mit dem zuvor bestimmten Packschema zu vergleichen, und um die Anzeigeeinrichtung 22; 48 so zu steuern, dass diese anzeigt, ob die Position des Packobjekts 12 in dem Packvolumen 14 mit dem zuvor bestimmten Packschema übereinstimmt.

Gemäß einem einundzwanzigsten Aspekt unter Rückbezug auf den zwanzigsten Aspekt kann die Erfassungseinrichtung 62 eine Kamera umfassen.

Gemäß einem zweiundzwanzigsten Aspekt unter Rückbezug auf einen des neunzehnten bis einundzwanzigsten Aspekts kann die Steuereinrichtung 16 ausgebildet sein, um die Anzeigeeinrichtung 22; 48 so zu steuern, dass eine Übereinstimmung der Position des Packobjekts 12 in dem Packvolumen 14 mit dem Packschema durch eine erste Farbe angezeigt wird und/oder eine fehlerhafte Position des Packobjekts in dem Packvolumen 14 durch eine hiervon verschiedene Farbe angezeigt wird.

Gemäß einem dreiundzwanzigsten Aspekt unter Rückbezug auf den zweiundzwanzigsten Aspekt kann die erste Farbe einer ersten Seite des Packobjekts 12 mit einer ersten Seitenlänge zugeordnet sein und eine dritte Farbe einer zweiten Seite des Packobjekts 12 einer zweiten, verschiedenen Seitenlänge zugeordnet sein, wobei die Steuereinrichtung ausgebildet sein kann, um die Übereinstimmung der Position unter Verwendung der ersten und der dritten Farbe anzuzeigen.

Gemäß einem vierundzwanzigsten Aspekt unter Rückbezug auf einen des neunzehnten bis dreiundzwanzigsten Aspekts kann das Packassistenzsystem ausgebildet sein, um die Überprüfung der Position des Packobjekts 12 in dem Packvolumen 14 bezüglich des zuvor bestimmten Packschemas basierend auf einer Benutzereingabe 66 auszuführen.

Gemäß einem fünfundzwanzigsten Aspekt unter Rückbezug auf einen des ersten bis vierundzwanzigsten Aspekts kann die Steuereinrichtung 16 ausgebildet sein, um zu Beginn eines Verpackungsprozesses die Anzeigeeinrichtung 22; 48 so zu steuern, dass diese eine Größe einer zu wählenden Kartonage anzeigt.

Gemäß einem sechsundzwanzigsten Aspekt unter Rückbezug auf einen des ersten bis fünfundzwanzigsten Aspekts kann das Packvolumen 14 ein Kartonageninnenvolumen oder ein bestapelbares Volumen sein.

Gemäß einem siebenundzwanzigsten Aspekt unter Rückbezug auf einen des ersten bis sechsundzwanzigsten Aspekts kann das Packobjekt 12 eines aus einer Mehrzahl von Packobjekten $12_1$-$12_4$ sein, wobei das Packassistenzsystem konfiguriert sein kann, um sequentiell nacheinander eine korrespondierende Mehrzahl von Ablageorten für die Mehrzahl von Packobjekten $12_1$-$12_4$ in dem Packvolumen 14 anzuzeigen.

Gemäß einem achtundzwanzigsten Aspekt unter Rückbezug auf einen des ersten bis siebenundzwanzigsten Aspekts kann das Packassistenzsystem ausgebildet sein, um ein zu packendes Packobjekt und/oder einen Ablageort und/oder eine Bestätigung eines korrekten Ablageorts akustisch auszugeben und/oder um eine akustische Eingabe, dass das Packobjekt 12 abgelegt wurde, akustisch zu empfangen.

Gemäß einem neunundzwanzigsten Aspekt kann ein Packarbeitsplatz 70; 80 Folgendes aufweisen: einen Verpackungstisch 28; und ein Packassistenzsystem 10; 20 gemäß einem der vorherigen Aspekte.

Gemäß einem dreißigsten Aspekt unter Rückbezug auf den neunundzwanzigsten Aspekt kann die Anzeigeeinrichtung 22; 48 des Packassistenzsystems in den Verpackungstisch 28 integriert sein.

Gemäß einem einunddreißigsten Aspekt unter Rückbezug auf den dreißigsten Aspekt kann die Anzeigeeinrichtung als abnehmbares Modul in den Verpackungstisch integriert sein oder fest mit in eine Verpackungstischplatte eingebracht sein.

Gemäß einem zweiunddreißigsten Aspekt kann ein Verfahren zur Unterstützung eines Verpackens zumindest eines Packobjekts in ein Packvolumen folgende Schritte aufweisen: Bestimmen eines Ablagebereichs für das zumindest eine Packobjekt in dem Packvolumen; und Anzeigen des Ablagebereichs benachbart zu dem Packvolumen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Packassistenzsystem (10; 20) zur Unterstützung eines Verpackens zumindest eines Packobjekts (12) in ein Packvolumen (14), umfassend:

   einer Steuereinrichtung (16), die ausgebildet ist, um einen Ablagebereich (18) für das zumindest eine Packobjekt (12) in dem Packvolumen (14) zu bestimmen; und
   einer an dem Packvolumen ausgerichteten Anzeigeeinrichtung (22; 48), die ausgebildet ist, um den Ablagebereich (18) anzuzeigen, wobei die Anzeigeeinrichtung (22; 48) benachbart zu dem Packvolumen (14) angeordnet ist.

2. Packassistenzsystem gemäß Anspruch 1, bei dem die Anzeigeeinrichtung (22; 48) zumindest zwei balkenförmige Anzeigeelemente (22a, 22b, 22c) umfasst, die ein Koordinatensystem für eine Ebene des Packvolumens (14) aufspannen.

3. Packassistenzsystem gemäß Anspruch 1 oder 2, bei dem die Anzeigeeinrichtung (22; 48) ausgebildet ist, um den Ablagebereich (18) durch eine räumlich selektive farbliche Veränderung eines Anzeigeelementes (22a, 22b, 22c) anzuzeigen.

4. Packassistenzsystem gemäß Anspruch 3, bei dem die Anzeigeeinrichtung so angeordnet ist, dass Anzeigeelemente (22a, 22b, 22c) ein Koordinatensystem mit zumindest zwei Achsen(x, y) für eine Ebene des Packvolumens (14) aufspannen und die Anzeigeeinrichtung (22; 48) ausgebildet ist, um die räumlich selektive farbliche Veränderung in Bereichen (32) der Achsen anzuzeigen, die gemeinsam den Ablageort (18) in der Ebene darstellen.

5. Packassistenzsystem gemäß Anspruch 3 oder 4, das ausgebildet ist, um die räumlich selektive farbliche Veränderung unter Verwendung einer ersten Farbe, die einer ersten Seite des Packobjekts (12) mit einer ersten Seitenlänge zugeordnet ist, und unter Verwendung einer zweiten Farbe, die einer zweiten Seite des Packobjekts (12) mit einer zweiten, verschiedenen Seitenlänge zugeordnet ist, auszuführen, so dass die erste und die zweite Farbe eine Orientierung des Packobjekts anzeigen.

6. Packassistenzsystem gemäß einem der vorangehenden Ansprüche, bei der die Anzeigeeinrichtung (22; 48) zumindest ein erstes longitudinales Leuchtmittel (22a) und ein zweites longitudinales Leuchtmittel (22b) umfasst, die konfiguriert sind, um in einer Anordnung senkrecht zu einander ein Koordinatensystem für eine Ebene des Packvolumens (14) aufzuspannen und durch räumlich selektive Aktivierung oder Deaktivierung von räumlichen Bereichen der longitudinalen Leuchtmittel den Ablageort (18) in der Ebene darzustellen.

7. Packassistenzsystem gemäß Anspruch 6, mit einem dritten longitudinalen Leichtmittel, das konfiguriert ist, um bei einer Anordnung senkrecht zu dem ersten longitudinalen Leuchtmittel und dem zweiten longitudinalen Leuchtmittel eine dritte Achse (z) des Koordinatensystems darzustellen und/oder, um einen Verpackungsfortschritt darzustellen.

8. Packassistenzsystem gemäß einem der vorangehenden Ansprüche, bei der die Anzeigeeinrichtung (22; 48) ausgebildet ist, um den Ablagebereich (18) in einer dem Ablagebereich zugeordneten Farbe anzuzeigen.

9. Packassistenzsystem gemäß einem der vorangehenden Ansprüche, bei dem der Ablageort (18) dem Packobjekt (12) gemäß einem Packschema zugeordnet ist, wobei das Packassistenzsystem eine Erfassungseinrichtung (62) aufweist, die ausgebildet ist, um das Packvolumen (14) zu erfassen, und um der Steuereinrichtung (16) ein Zustandssignal (74) bereitzustellen, das eine Information bezüglich einer Identifikation eines Packobjekts (12) aufweist, wobei die Steuereinrichtung (16) konfiguriert, ist um basierend auf dem Zustandssignal (74) den Ablagebereich (18) gemäß der Zuordnung in dem Packschema anzuzeigen.

10. Packassistenzsystem gemäß einem der vorangehenden Ansprüche, ferner umfassend eine Sensoreinrichtung (36; 58), die konfiguriert ist, um eine Abmessung des Packobjekts (12) zu erfassen und ein Sensorsignal bereitzustellen, das die Abmessung angibt, wobei die Steuereinrichtung (16) ausgebildet ist, um Stammdaten des zumindest einen Packobjekts (12) basierend auf dem Sensorsignal zu bestimmen.

11. Packassistenzsystem gemäß Anspruch 10, bei dem die Sensoreinrichtung (16) eine Mehrzahl von Näherungssensoren und/oder eine Mehrzahl von Photodetektoren umfasst, die ausgebildet sind, um eine Anwesenheit des Packobjekts (12) in einer Nähe der Sensoreinrichtung (36; 58) zu erfassen.

12. Packassistenzsystem gemäß Anspruch 10, bei dem eine Kamera (62) angeordnet ist, um ein Verpackungsdesign und/oder einen Identifizierungsparameter des Packobjekts (12) zu erfassen und der Steuereinrichtung (16) bereitzustellen.

13. Packassistenzsystem gemäß einem der vorangehenden Ansprüche, das ausgebildet ist, um eine Überprüfung einer Position des Packobjekts (12) in dem Packvolumen (14) bezüglich eines zuvor bestimmten Packschemas auszuführen.

14. Packassistenzsystem Anspruch 14, das eine Erfassungseinrichtung (62) aufweist, die ausgebildet ist, um das Packvolumen (14) zu erfassen, und um der Steuereinrichtung (16) ein Erfassungssignal (64) bereitzustellen, wobei die Steuereinrichtung (16) ausgebildet ist, um basierend auf dem Erfassungssignal (64) die Position des Packobjekts (12) in dem Packvolumen (14) zu erfassen und mit dem zuvor bestimmten Packschema zu vergleichen, und um die Anzeigeeinrichtung (22; 48) so zu steuern, dass diese anzeigt, ob die Position des Packobjekts (12) in dem Packvolumen (14) mit dem zuvor bestimmten Packschema übereinstimmt.

15. Packassistenzsystem gemäß Anspruch 14, bei dem die Steuereinrichtung (16) ausgebildet ist, um die Anzeigeeinrichtung (22; 48) so zu steuern, dass eine Übereinstimmung der Position des Packobjekts (12) in dem Packvolumen (14) mit dem Packschema durch eine erste Farbe angezeigt wird und/oder eine fehlerhafte Position des Packobjekts in dem Packvolumen (14) durch eine hiervon verschiedene Farbe angezeigt wird.

16. Packassistenzsystem gemäß Anspruch 15, bei dem die erste Farbe einer ersten Seite des Packobjekts (12) mit einer ersten Seitenlänge zugeordnet ist und eine dritte Farbe einer zweiten Seite des Packobjekts (12) einer zweiten, verschiedenen Seitenlänge zugeordnet ist, wobei die Steuereinrichtung ausgebildet ist, um die Übereinstimmung der Position unter Verwendung der ersten und der dritten Farbe anzuzeigen.

17. Packassistenzsystem gemäß einem der Ansprüche 14 bis 16, das ausgebildet ist, um die Überprüfung der Position des Packobjekts (12) in dem Packvolumen (14) bezüglich des zuvor bestimmten Packschemas basierend auf einer Benutzereingabe (66) auszuführen.

18. Packassistenzsystem gemäß einem der vorangehenden Ansprüche, bei dem die Steuereinrichtung (16) ausgebildet ist, um zu Beginn eines Verpackungsprozesses die Anzeigeeinrichtung (22; 48) so zu steuern, dass diese ein Größe einer zu wählenden Kartonage anzeigt.

19. Packassistenzsystem gemäß einem der vorangehenden Ansprüche, das ausgebildet ist, um ein zu packendes Packobjekt und/oder einen Ablageort und/oder eine Bestätigung eines korrekten Ablageorts akustisch auszugeben und/oder um eine akustische Eingabe, dass das Packobjekt (12) abgelegt wurde, akustisch zu empfangen.

20. Packarbeitsplatz (70; 80) mit:

   einem Verpackungstisch (28); und
   einem Packassistenzsystem (10; 20) gemäß einem der vorangehenden Ansprüche.

21. Packarbeitsplatz gemäß Anspruch 20, bei dem die Anzeigeeinrichtung (22; 48) des Packassistenzsystems in den Verpackungstisch (28) integriert ist; wobei die Anzeigeeinrichtung als abnehmbares Modul in den Verpackungstisch integriert ist oder fest mit in eine Verpackungstischplatte eingebracht ist.

22. Verfahren zur Unterstützung eines Verpackens zumindest eines Packobjekts in ein Packvolumen mit folgenden Schritten:

   Bestimmen eines Ablagebereichs für das zumindest eine Packobjekt in dem Packvolumen; und
   Anzeigen des Ablagebereichs benachbart zu dem Packvolumen.

Fig. 1

EP 3 594 139 A2

Fig. 2

Fig. 3

Fig. 4

EP 3 594 139 A2

48b

54 36b

22b

$S_y$

52

54
54

$S_x$

54

36a

48-1

52

22a

48a

y

x

X

Fig. 5a

20

EP 3 594 139 A2

Fig. 5b

Fig. 6

EP 3 594 139 A2

Fig. 7

EP 3 594 139 A2

Fig. 8

EP 3 594 139 A2